(19) Europäisches Patentamt / European Patent Office / Office européen des brevets

(11) **EP 2 786 473 B1**

(12) **EUROPÄISCHE PATENTSCHRIFT**

(45) Veröffentlichungstag und Bekanntmachung des Hinweises auf die Patenterteilung:
**10.02.2016   Patentblatt 2016/06**

(51) Int Cl.:
*H02J 3/38* *(2006.01)*          *H02M 1/00* *(2006.01)*
*H02M 7/797* *(2006.01)*        *H02M 5/40* *(2006.01)*
*H02M 1/12* *(2006.01)*          *H02M 7/81* *(2006.01)*
*H02M 7/66* *(2006.01)*

(21) Anmeldenummer: **12794637.4**

(22) Anmeldetag: **16.11.2012**

(86) Internationale Anmeldenummer:
**PCT/EP2012/004763**

(87) Internationale Veröffentlichungsnummer:
**WO 2013/079170 (06.06.2013 Gazette 2013/23)**

(54) **VERFAHREN UND SCHALTUNG ZUM AUSTAUSCH VON LEISTUNG ZWISCHEN EINEM MEHRPHASIGEN WECHSELSPANNUNGSSYSTEM UND EINEM ELEKTRISCHEN TEILNEHMER**

METHOD AND CIRCUIT FOR EXCHANGING POWER BETWEEN A MULTI-PHASE AC VOLTAGE SYSTEM AND AN ELECTRICAL SUBSCRIBER

PROCÉDÉ ET CIRCUIT D'ÉCHANGE DE PUISSANCE ENTRE UN SYSTÈME DE TENSION ALTERNATIVE MULTIPHASE ET UN ABONNÉ ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2011   DE 102011119809**
**05.06.2012   DE 102012011118**

(43) Veröffentlichungstag der Anmeldung:
**08.10.2014   Patentblatt 2014/41**

(73) Patentinhaber: **Diehl AKO Stiftung & Co. KG**
**88239 Wangen (DE)**

(72) Erfinder:
• ZEH, Stefan
  88239 Wangen (DE)
• WEINMANN, Martin
  88339 Bad Waldsee (DE)
• SCHÜTZ, Artur
  88239 Wangen (DE)

(74) Vertreter: **Diehl Patentabteilung**
**c/o Diehl Stiftung & Co. KG**
**Stephanstrasse 49**
**90478 Nürnberg (DE)**

(56) Entgegenhaltungen:
**EP-A2- 1 833 153**

EP 2 786 473 B1

**Beschreibung**

Die Erfindung betrifft ein Verfahren zum Austausch von Leistung zwischen einem mehrphasigen Wechselspannungssystem und einem elektrischen Teilnehmer über einen unipolaren Spannungszwischenkreis, wobei sich ein über Mittenabgriffe von schaltbaren Halbbrücken an dem Wechselspannungssystem angeschlossener mehrphasiger Wechselrichter den Spannungszwischenkreis mit dem elektrischen Teilnehmer teilt, durch ein getaktetes Schalten der Mittenabgriffe zwischen einer oberen Zwischenkreisschiene und einer unteren Zwischenkreisschiene des Spannungszwischenkreises. Die Erfindung betrifft weiter eine Schaltung zur Durchführung des angegebenen Verfahrens, umfassend einen an ein mehrphasiges Wechselspannungssystem über Mittenabgriffe von schaltbaren Halbbrücken anschließbaren mehrphasigen Wechselrichter, einen am Wechselrichter angeschlossenen unipolaren Spannungszwischenkreis und einen am Spannungszwischenkreis angeschlossenen elektrischen Teilnehmer.

Das Verfahren der eingangs genannten Art sowie eine hierfür entsprechend vorgesehene Schaltung dienen dem Austausch von Leistung zwischen einem elektrischen Teilnehmer und einem mehrphasigen Wechselspannungssystem. Der elektrische Teilnehmer kann hierbei ein elektrischer Verbraucher, wie beispielsweise ein Wechselstrommotor, oder eine elektrische Energiequelle, wie ein Akkumulator oder ein Solargenerator, sein. Von dem elektrischen Teilnehmer kann sowohl Leistung in das Wechselspannungssystem übertragen als auch Leistung _ aus dem Wechselspannungssystem entnommen werden. Der mehrphasige Wechselrichter und der elektrische Teilnehmer teilen sich hierbei einen gemein-samen unipolaren Spannungszwischenkreis. Der wechselspannungssystemseiti-ge Wechselrichter übt hierbei eine aktive Gleichrichtfunktion aus, um die elektrische Zwischenkreisenergie an die Spannungen des Wechselspannungssystems anzupassen, so dass Phasenströme mit geringem Oberwellenanteil fließen.

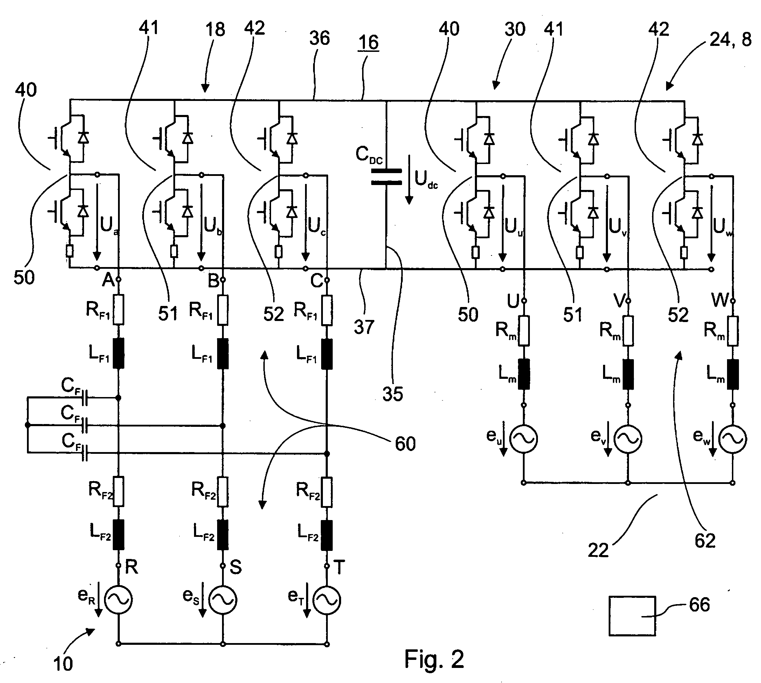

Ein mehrphasiger Wechselrichter zur Erzeugung von Ausgangsspannungen aus einem Spannungszwischenkreis oder umgekehrt zu einer aktiven Gleichrichtung von Ausgangsspannungen in eine unipolare Spannung eines Spannungszwischenkreises ist aus dem Stand der Technik hinlänglich bekannt. Aus Fig. 2 können links ein mit einem Wechselspannungssystem verbundener Wechselrichter 18 mit Gleichrichtfunktion und rechts ein gleich aufgebauter Wechselrichter 24 zur Erzeugung von Wechselspannungen aus einer unipolaren Zwischenkreisspannung entnommen werden.

Ein beispielhaft dargestellter dreiphasiger Wechselrichter umfasst drei Halbbrücken mit jeweils zwei Paaren aus je einem Schaltelement und einer parallel geschalteten Diode. Jeweils zwischen den Paaren einer Halbbrücke sind an den Mittenabgriffen die einzelnen Phasen für das Wechselspannungssystem bzw. für eine elektrische Maschine kontaktiert. Die Spannungen des Wechselspannungssystems bzw. die für die Maschine benötigten Spannungen sind durch die Potentialdifferenzen der einzelnen Phasen zueinander gegeben. Durch wechselweises Schalten der beiden Schaltelemente einer Halbbrücke wird die jeweilige Phase bzw. der jeweilige Mittenabgriff abwechselnd auf das obere oder das untere Zwi-schenkreispotential geklemmt bzw. abwechselnd mit der oberen und der unteren Zwischenkreisschiene verbunden.

Die Ansteuerung der insgesamt sechs Schaltelemente eines dreiphasigen Wechselrichters, von denen jeweils zwei auf eine der drei Halbbrücken des Wechselrichters verteilt sind, mittels Pulsweitenmodulation ist bekannt, wozu beispielhaft auf Handley, P.G.; Boys, J.T; "Practical real-time PWM modulators: an assess-ment", IEE Proceedings B, Electric Power Applications, Volume 139, pp. 96 ff., Issue 2, März 1992 verwiesen wird. Als Schaltelemente weisen moderne Wechselrichter fast ausschließlich schaltbare Leistungshalbleiter auf. Als derartige Leistungshalbleiter werden neben Feldeffekttranstoren, MOS-FET ("Metal Oxide Semiconductor" - Feldeffekt-Transistoren) und Bipolar-Transistoren, insbesondere sogenannte IGBT's (Insulated Gate Bipolar Transistors) eingesetzt. Letztere vereinbaren dabei die Vorzüge von Feldeffekt- und Bipolartransistoren.

Bei der Pulsweitenmodulation wird für die Phase einer Halbbrücke das mittlere Potential oder die mittlere Spannung gegenüber einem Bezugspotential, z. B. $U_a$ entsprechend Figur 2, durch Wechsel der Schaltzustände der entsprechenden Schaltelemente innerhalb einer vorgegebenen Periodendauer eingestellt. Mit anderen Worten wird bei der Pulsweitenmodulation bei konstanter Frequenz der Tastgrad moduliert. Der Wert der Ausgangsspannung einer Periodendauer resultiert hierbei durch eine "Mittelung" der jeweils eingestellten Schaltzustände bzw. aus dem Verhältnis der Schaltzeiten der Klemmung an das obere und der Klemmung an das untere Zwischenkreispotential.

Zulässige Schaltzustände des Wechselrichters sind für jeweils eine Halbbrücke "TopOn", d. h. oberes Schaltelement an und unteres Schaltelement aus, "Bot (- tom) on", d.h. unteres Schaltelement an und oberes Schaltelement aus sowie "Totzeit", falls beide der Schaltelemente ausgeschaltet sind. Der letzte Schaltzustand einer "Totzeit" wird gewöhnlich nur für vernachlässigbare kleine Zeitdauern (ca. 1% Dauer) zwischen den Zuständen "TopOn" oder "BotOn" eingestellt. Es wird also bei vernachlässigbarer Totzeit innerhalb einer Periodendauer $T_p$ (z.B. 100 µs) abwechselnd "TopOn" für die Zeit $T_{top}$ und anschließend "BotOn" für die Zeit $T_{bot} = T_p - T_{top}$ eingestellt. Werden die Spannungen der jeweiligen Halbbrücken $U_a$, $U_b$ und $U_c$ entsprechend Figur 2 gegen den unteren Zweig des Spannungszwischenkreises gemessen, zwischen dessen Zweigen die Spannung $U_{DC}$ anliegt, so ergibt sich ein Einschaltverhältnis der jeweiligen Halbbrücke von $\tau = T_{top}/T_p$. Die mittlere Spannung ergibt sich dann beispielhaft für die Halbbrücke a zu

$$U_a = \tau_a \cdot U_{DC}.$$

Im stationären Betrieb eines Drehfeldsystems sind die zu generierenden Soll-Potentialdifferenzen bzw. die Sollspannungen zwischen den drei Phasen in der Regel dreiphasig sinusförmig. Bei dreiphasigem Wechselstrom beträgt die Phasendifferenz zwischen den einzelnen Phasen jeweils 120°. Die Einschaltverhältnisse der drei Halbbrücken des Wechselrichters werden dann durch eine Regel der folgenden Art generiert:

$$\tau_a = \hat{\tau} \cdot \cos(\omega t) + \tau_0$$

$$\tau_b = \hat{\tau} \cdot \cos\left(\omega t - \frac{2\pi}{3}\right) + \tau_0$$

$$\tau_c = \hat{\tau} \cdot \cos\left(\omega t - \frac{4\pi}{3}\right) + \tau_0 ,$$

wobei $\hat{\tau} = \hat{u}_{ref}/U_{DC}$ die Amplitude der Aussteuerung, $\hat{u}_{ref}$ die Amplitude der Soll-Grundwelle der Leiterspannungen, $U_{DC}$ die Spannung des DC-Zwischenkreises und $\tau_0$ den gemeinsamen Off-Set der Einschaltverhältnisse bezeichnet. Der Bezug der Sollspannungen auf die Zwischenkreisspannung wird im Folgenden als "Normierung" bezeichnet.

Zur Erzeugung der gewünschten Spannungen zwischen den einzelnen Phasen des Wechselrichters $U_{ab} = U_a-U_b$, $U_{bc} = U_b - U_c$, $U_{ca} = U_c - U_a$ mittels Pulsweitenmodulation gibt es erkennbar verschiedene Varianten. Da in einem Drehstromsystem nur die Spannungen oder Differenzsignale zwischen den Phasen $U_{ab}$, $U_{bc}$, $U_{ca}$ sinusförmig gefordert werden, kann den Einzelpotentialen $U_a$, $U_b$, $U_c$ ein gemeinsamer Offset $U_0$, auch Nullsystem genannt, überlagert werden. Das Nullsystem $U_0$ wird so gewählt, dass die mittleren Einzelpotentiale an den Wechselrichterzweigen im Bereich zwischen Null und $U_{DC}$ liegen, respektive $\tau_0$ so gewählt, dass die Einschaltverhältnisse $\tau_a$, $\tau_b$ und $\tau_c$ zwischen Null und Eins liegen. Ein Einschaltverhältnis von $\tau_a = 0$ bedeutet dabei, dass der entsprechende Wechselrichterzweig a nicht geschaltet bzw. getaktet wird, sondern vielmehr während der gesamten Periodendauer dauerhaft auf das untere Zwischenkreispotential geklemmt wird. Ein Einschaltverhältnis von $\tau_a = 1$ bedeutet, dass der entsprechende Wechselrichterzweig nicht geschaltet bzw. getaktet wird, sondern vielmehr während der gesamten Periodendauer dauerhaft auf das obere Zwischenkreispotential geklemmt wird.

Mithin lässt sich zeigen, dass es insbesondere für ein dreiphasiges Sinussystem in dem Differenzsignal zwischen den Phasen möglich ist, die Einzelpotentiale der Phasen mittels Pulsweitenmodulation derart zu generieren, dass jeweils nur zwei Halbbrücken getaktet werden, während die jeweils dritte Halbbrücke dauerhaft auf das obere oder auf das untere Zwischenkreispotential geklemmt ist bzw. die Einschaltdauer dieser Halbbrücke entweder Eins oder Null ist. Gegenüber dem Modulationsverfahren, in dem zur Erzeugung der Einzelpotentiale alle drei Halbbrücken getaktet betrieben werden, weist das Modulationsverfahren der Zwei-Phasen-Taktung geringere Schaltverluste auf. Die Schalthäufigkeit ist verringert.

Ein Modulationsverfahren der Zwei-Phasen-Taktung ist beispielsweise aus der EP 0 363 514 A1 bekannt. Dabei werden jeweils hinsichtlich der Periode des gewünschten sinusförmigen Ausgangssignals für jeweils 60° nur zwei Phasen bzw. zwei der Halbbrücken getaktet, während die jeweils dritte Phase bzw. Halbbrücke dauerhaft auf das obere oder das untere Zwischenkreispotential geklemmt wird. Hierdurch verringern sich gegenüber dem Modulationsverfahren einer Drei-Phasen-Taktung die Schaltverluste in den Schaltelementen. Die Schalthäufigkeit ist um ein Drittel reduziert. Nachteiligerweise erhöhen sich jedoch die Leitungsverluste in dem dauerhaft geklemmten Schaltelement.

In einer anderen Methode der Pulsweitenmodulation für einen dreiphasigen Wechselrichter, der sogenannten Raumzeigermodulation, werden den einzelnen möglichen Schaltzuständen des Wechselrichters Zeiger oder Vektoren zugeordnet, die in einem Zahlentripel den jeweils gegebenen Schaltzustand konkret angeben. Den vorbeschriebenen Schaltzuständen "TopOn" und "BotOn" einer jeweiligen Halbbrücke werden dabei die Zahlenwerte "1" bzw. "0" zugeordnet. Die Halbbrücken a, b, c entsprechen in dem Zahlentripel der ersten, zweiten bzw. dritten Position. So beschreibt beispielsweise das Zahlentripel (1,1,0) den Schaftzustand des Wechselrichters, wobei die erste Halbbrücke a und die zweite Halbbrücke b den Schaltzustand "TopOn" und die dritte Halbbrücke c den Schaltzustand "BotOn" aufweisen. Die Zahlentripel (0,0,0) und (1,1,1) werden auch als Null-Vektoren oder Null-Zeiger bezeichnet, da in diesen Schaltzuständen alle Phasen des Wechselrichters entweder auf das obere oder auf das untere Zwischenkreispotential geklemmt sind. Die Spannungen oder Potentialdifferenzen zwischen den einzelnen Phasen sind somit Null. Bei den Null-Vektoren handelt es sich insofern um inaktive Zustände des Wechselrichters. Für einen dreiphasigen Wechselrichter verbleiben somit insgesamt sechs aktive mögliche Schaltkonfigurationen.

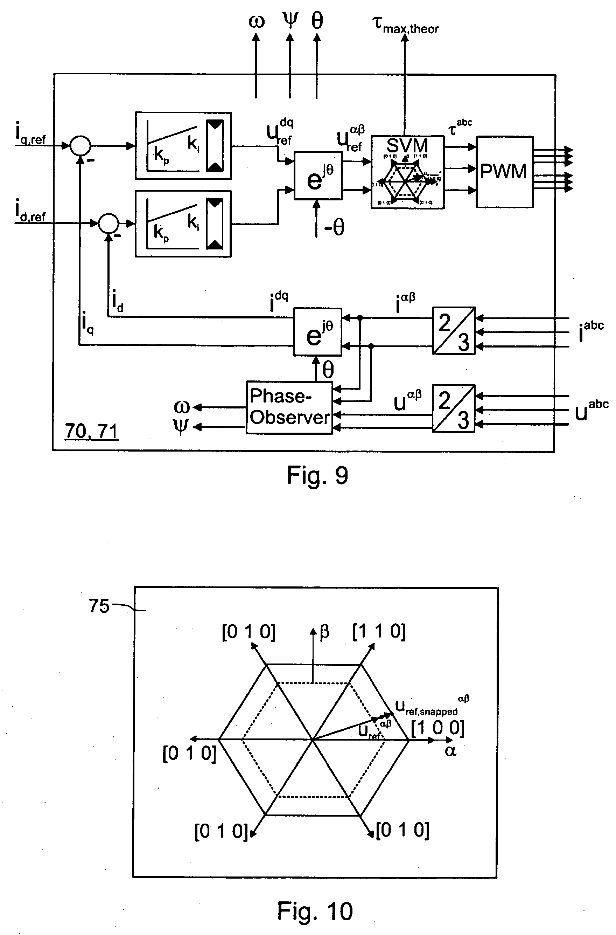

Zur Methode der Raumzeigermodulation werden die den aktiven Schaltzuständen zugeordneten Zeiger oder Vektoren entsprechend Fig. 10 aufgetragen, wobei sich benachbarte Zeiger jeweils nur in einem Schaltzustand einer Halbbrücke unterscheiden. Die jeweils zwischen zwei benachbarten Vektoren aufgespannten Sektoren werden entsprechend durchnummeriert. Mathematisch handelt es sich bei der Methode der Raumzeigermodulation entsprechend Fig. 10 um eine Transformation der dreidimensionalen Beschreibung der Ausgangsgrößen eines dreiphasigen Wechselrichters in den zweidimensionalen Raum. Die Ausgangsspannungen des Wechselrichters rotieren dabei als zweidimensionale Vektoren innerhalb des durch die sechs Basisvektoren der Zustände des Wechselrichters aufgespannten Hexagons entsprechend Fig. 10.

Spannungsvektoren zwischen jeweils zwei Basisvektoren oder aktiven Zuständen des Wechselrichters werden durch die Einschaltdauern der aktiven Zustände generiert. Zur Generierung von Spannungsvektoren, die nicht bis zum Rand des Hexagons reichen, werden innerhalb der Periodendauer Schaltzustände der Null-Vektoren hinzugefügt. Die Einschaltzeiten aller gewählten Schaltzustände addieren sich zur Periodendauer der Pulsweitenmodulation. Werden keine Null-Vektoren hinzugeschaltet, können nur Ausgangsspannungen generiert werden, deren zugehörige Vektoren im Diagramm entsprechend Fig. 10 auf dem Rand des Hexagons enden.

Die Generierung eines Spannungsvektors unter intelligenter Zuschaltung der Nullvektoren entspricht dem vorbeschriebenen Modulationsverfahren einer Zwei-Phasen-Taktung. In jedem Sektor werden die Spannungswerte durch benachbarte Basisvektoren oder Schaltzustände des Wechselrichters eingestellt, die sich jeweils nur im Schaltzustand einer Halbbrücke unterscheiden. Beispielsweise unterscheiden sich die den Sektor 1 aufspannenden Basisvektoren (1, 1,0) und (1, 0, 0) nur im Schaltzustand der zweiten Halbbrücke. Wird innerhalb eines Sektors konsequent auf jeweils einen Null-Vektor, d.h. vorliegend entweder auf den Null-Vektor (1,1,1) oder auf den Null-Vektor (0,0,0) umgeschaltet, so bleibt zusätzlich entweder die erste oder die dritte Halbbrücke dauerhaft auf das obere oder auf das untere Zwischenkreispotential geklemmt.

Aus Fig. 10 wird zugleich ersichtlich, dass Spannungsvektoren, die außerhalb des einbeschriebenen Hexagons enden, nicht erzeugt werden können. Der durch die Basisvektoren vorgegebene maximale Spannungsbetrag kann innerhalb der Sektoren nicht erreicht werden. Werden während der Ansteuerung des Wechselrichters Spannungswerte an den Ausgangsklemmen benötigt, die außerhalb des Hexagons liegen, so sind diese auf das sogenannte Hexagon-Limit begrenzt, d.h. die entsprechenden Vektoren enden auf dem Rand des Hexagons. Man spricht dann von einer sogenannten Übermodulation. Der eigentliche notwendige Spannungs- oder Potentialverlauf einer Phase kann nicht mehr generiert werden. Die Spannung zwischen zwei Phasen des Wechselrichters weist dann einen deformierten Sinus-Verlauf auf, was mit unerwünschten Oberschwingungen im Signal verbunden ist.

Bei der Steuerung oder Regelung eines Wechselrichters für ein Drehstromsystem mittels Raumzeigermodulation werden generell die das System beschreibenden Größen und insbesondere die Ausgangsgrößen des Wechselrichters in ein zweidimensionales Koordinatensystem transformiert. Bei der sogenannten feldorientieren Regelung rotiert das zweidimensionale Koordinatensystem zur Beschreibung der Raumzeigergrößen mit dem magnetischen Fluss des Drehstromsystems. Die Koordinaten der Raumzeigergrößen bei der feldorientieren Regelung werden mit d und q bezeichnet. Eine andere Möglichkeit ist die Transformation in ein zweidimensionales statorfestes Koordinatensystem. Die Koordinaten der Raumzeigergrößen in diesem System werden mit α und β bezeichnet. Zur Regelung eines Drehstromsystems mittels Raumzeigermodulation werden real gemessene Zustandsgrößen wie Klemmenspannungen oder Motorströme gemessen, mathematisch in die jeweiligen Raumzeigergrößen transformiert und der Wechselrichter entsprechend der transformierten Raumzeigergrößen auf die gewünschten Schaltzustände zur Erzeugung der Spannungen zwischen den Phasen angesteuert. Insbesondere ist dabei auf die zweidimensionale Darstellung zur Erzeugung der Ausgangsspannungen entsprechend Fig. 10 Bezug genommen.

Bei einer stromgeführten Regelung des Wechselstromsystems werden die Ausgangsspannungen des Wechselrichters in Abhängigkeit von einer Abweichung des Iststroms von einem Sollstrom, beispielsweise durch Vorgabe eines Sollwertes für die feldbildende Stromkomponente $I_d$ und eines Sollwertes für die momentbildende Stromkomponente $I_q$, angesteuert. Die Regelung eines Drehstromsystems innerhalb des d, q - Koordinatensystems hat dabei den Vorteil, dass die zu einer Blindleistung führende Stromkomponente $I_d$, weil feldbildend, und die momentbildende Komponente $I_q$ unmittelbar ersichtlich werden.

Die Ansteuerung eines Wechselrichters mittels Pulsweitenmodulation anhand von Raumzeigergrößen ist beispielsweise in der US 6,819,078 B2 beschrieben. Dazu wird ein Rechenalgorithmus angegeben, mit dem bei vektorgeregelten Wechselrichtern aus einem Soll-Spannungsvektor die Einschaltverhältnisse $\tau_a$, $\tau_b$, $\tau_c$ mit einfachen Rechenoperationen berechnet werden kann. Mit dem angegebenen Algorithmus sind Modulationsverfahren sowohl mit einer Drei-Phasen-Taktung als auch mit einer Zwei-Phasen-Taktung möglich. Dabei wird eine Übermodulation dadurch erkannt, dass innerhalb des Algorithmus eine negative Einschaltdauer für einen Null-Vektor auftritt, was der Anforderung eines Spannungswertes außerhalb des hexagonalen Limits entspricht. Im Falle einer Übermodulation wird die dem Spannungswert zugeordnete Raumzeigergröße reskaliert, so dass die Spannungswerte wieder innerhalb des hexagonalen Limits liegen. Eine Übermodulation mit den bekannten Nachteilen wird somit verhindert. Weiter ist aus der EP 0 840 441 B1 eine feldorientierte Regelung einer Drehfeldmaschine bekannt, wobei die Ausgangsspannungen an der Spannungsdecke geführt sind. Zum Vorsehen einer Spannungsbegrenzung wird bei einer Regelung im d, q- Koordinatensystem der Betrag der momentbildenden Stromkomponente iq verringert, wenn die Spannungskomponente $U_d$ in Flussrichtung einen Grenzwert erreicht, und es wird die feldbildende Stromkomponente

$I_d$ verkleinert, wenn die Spannungskomponente Uq senkrecht zur Flussrichtung einen weiteren Grenzwert erreicht. Entsprechend der begrenzten Spannungskomponenten $U_d$, Uq werden die entsprechenden Phäsenspannungen des Wechselrichters gesteuert. Insbesondere wird für die Grenzwerte die maximal verfügbare Ausgangsspannung des Wechselrichters gewählt, so dass die für den Wechselrichter vorgegebenen Einschaltverhältnisse der Halbbrücken kleiner "1" sind bzw. der Wechselrichter innerhalb des hexagonalen Limits angesteuert wird. Damit wird eine für Last notwendige Spannungsreserve geschaffen, wozu die feldbildende und/oder die momentbildende Stromkomponente verringert sind. Da der Wechselrichter unterhalb des hexagonalen Limits betrieben wird, ist eine Übermodulation vermieden, die durch Anforderung von nicht realisierbaren Spannungswerten zu Regelschwierigkeiten führen kann.

Entsprechend der EP 2 192 682 A1 wird vorgeschlagen, den Spannungsbedarf einer Drehfeldmaschine über ein Kennlinienfeld für den feldbildenden Strom $I_d$ einzustellen, so dass der Querstromregler sowie der Längsstromregler keine Stellbegrenzung erreichen. Würden die Stellgrößen der Stromregler durch die maximal mögliche Spannung begrenzt, so könnten die Sollstromkomponenten $I_d$, $I_q$ nicht mehr geführt werden und das Verhalten der Maschine würde unbestimmt. Auch hier wird eine Übermodulation also bewusst vermieden.

Aufgabe der Erfindung ist es, ein Verfahren und eine Schaltung zum Austausch von Leistung zwischen einem mehrphasigen Wechselspannungssystem und einem elektrischen Teilnehmer über einen gemeinsamen Spannungszwischenkreis der eingangs genannten Art anzugeben, wobei der am Wechselspannungssystem angeschlossene Wechselrichter derart betrieben wird, dass die einzelnen Wechselrichterschaltelemente möglichst wenig belastet werden.

Hinsichtlich eines Verfahrens wird die gestellte Aufgabe erfindungsgemäß dadurch gelöst, dass der Wechselrichter überwiegend nach dem Modulationsverfahren einer Ein-Phasen-Taktung betrieben wird, wobei die Zwischenkreisspannung mit einem Wechselanteil derart moduliert wird, dass der Leistungsaustausch mit dem Wechselspannungssystem über oberwellenarme Phasenströme erfolgt.

Die Erfindung geht dabei in einem ersten Schritt überraschend davon aus, den am Wechselspannungssystem angeschlossenen Wechselrichter bewusst überwiegend mit dem Modulationsverfahren einer Ein-Phasen-Taktung zu betreiben. "Überwiegend" bedeutet hierbei, dass während des Betriebs des Wechselrichters auch andere Modulationsverfahren, beispielsweise die Zwei-Phasen-Taktung, auftreten können. Durch eine entsprechende Regelung oder Steuerung des Wechselrichters wird jedoch während der überwiegenden Zeit seines Betriebs ein Modulationsverfahren der Ein-Phasen-Taktung erzwungen. Mit anderen Worten stellt das Modulationsverfahren einer Ein-Phasen-Taktung das Soll-Modulationsverfahren des Wechselrichters dar.

Bei dem Modulationsverfahren einer Ein-Phasen-Taktung wird im Betrieb des Wechselrichters zu jedem Zeitpunkt lediglich eine Phase getaktet. Während einer Periode der Pulsweitenmodulation ändert jeweils nur eine der drei Halbbrücken des Wechselrichters ihr Schaltmuster.

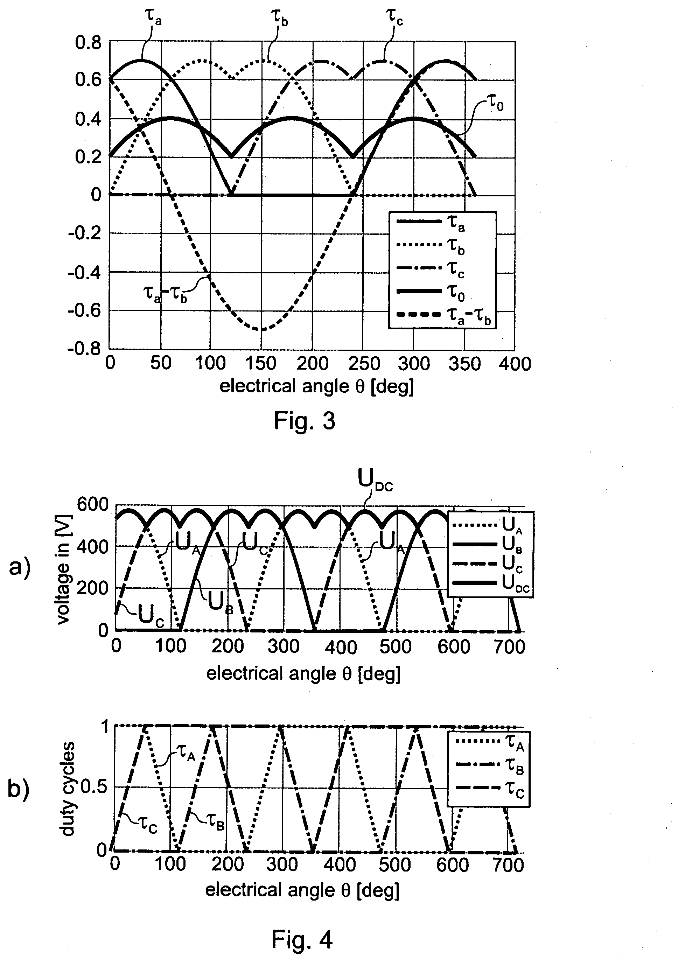

Zum Verständnis des Modulationsverfahrens der Ein-Phasen-Taktung sind in Fig. 3 für einen Drehstromwechselrichter mit konstanter Zwischenkreisspannung zunächst die entsprechenden zeitlichen Verläufe der Einschaltverhältnisse, des Nullsystems $\tau_0$, sowie der Differenz der Einschaltverhältnisse $\tau_a$ - $\tau_c$ für das Modulationsverfahren einer Zwei-Phasen-Taktung dargestellt. Da die Wahl des Nullsystems innerhalb gewisser Grenzen frei ist, kann das Nullsystem so gestaltet werden, dass jeweils nur zwei der drei Halbbrücken während einer Periode der Pulsweitenmodulation ihr Schaltmuster ändern. Das Potential der jeweils dritten Halbbrücke bleibt dauerhaft entweder auf das obere oder auf das untere Zwischenkreispotential geklemmt. Das Modulationsverfahren einer Zwei-Phasen-Taktung ist auch unter dem Begriff einer zwischenkreisgeklemmten Pulsweitenmodulation (engl.: "bus clamped PWM") bekannt. Bezogen auf eine komplette Periode des gewünschten Differenzsignals zwischen zwei Phasen bleibt immer für 120° eine Halbbrücke mit der oberen oder der unteren (was bevorzugt ist) Zwischenkreisschiene geklemmt oder wird abwechselnd für jeweils 60° auf die untere Schiene und dann eine andere Halbbrücke für 60° auf die obere Schiene geklemmt. In Fig. 3 ist hierbei das Modulationsverfahren einer Zwei-Phasen-Taktung gemäß der "120° bus clamped"-Methode gezeigt. Das Nullsystem $\tau_0$ ergibt sich durch Anwendung der entsprechenden Rechenvorschrift aus der gewünschten Zwei-Phasen-Taktung.

Das Modulationsverfahren einer Zwei-Phasen-Taktung weist die Vorteile eines insgesamt um ein Drittel reduzierten Schaltverlustes gegenüber dem Modulationsverfahren einer Drei-Phasen-Täktung auf. Die Schalthäufigkeit der Schaltelemente ist um ein Drittel geringer.

In Fig. 3 ist das Modulationsverfahren einer Zwei-Phasen-Taktung mit einer Amplitude von $\hat{\tau}$ = 0,4 dargestellt. Die maximal mögliche verzerrungsfreie Grundschwingungsamplitude beträgt $\hat{\tau}$ = 0,577. Mit dieser Amplitude wird im Maximum der Einschaltverhältnisse $\tau_a$, $\tau_b$, $\tau_c$ jeweils ein Wert von 1 erreicht.

Von dem Modulationsverfahren einer Zwei-Phasen-Taktung entsprechend Fig. 3 kann auf das Modulationsverfahren einer Ein-Phasen-Taktung übergegangen werden, indem jeweils das maximale Einschaltverhältnis der drei Einschaltverhältnisse $\tau_a$, $\tau_b$, $\tau_c$ auf den Wert 1 hochgesetzt wird. Der Wechselrichter wird dann konsequent an der Spannungsdecke betrieben. Zu einer verzerrungsfreien Grundwelle des Ausgangssignals als Differenz zwischen jeweils zwei Phasen würden dabei jedoch theoretische Einschaltverhältnisse für die einzelnen Halbbrücken von > 1 gefordert werden, die durch den Wechselrichter nicht mehr darstellbar sind Das Modulationsverfahren der Ein-Phasen-Taktung kann jedoch dann angewendet werden, wenn die Zwischenkreisspannung mit einem Wechselanteil derart moduliert wird, dass die jeweils geklemmte Phase ihre zur verzerrungsfreien Darstellung der Grundwelle notwendige Spannungsmodulation durch die Zwischenkreisspannung erfährt.

Dazu sind in Fig. 4 (a) die Phasenspannungen $U_a$, $U_b$ und $U_c$ dargestellt, die sich bei dem Modulationsverfahren der Ein-Phasen-Taktung eines Wechselrichters ergeben, wenn die unipolare Zwischenkreisspannung $U_{DC}$ mit einem Wechselanteil der sechsfachen Frequenz der Grundwelle moduliert ist. Die sich aus den Einschaltverhältnissen $\tau_a$, $\tau_b$, $\tau_c$ ergebenden Spannungen werden nach Erreichen des maximal möglichen Einschaltverhältnisses von $\tau = 1$ über den Wechselanteil von $U_{DC}$ fortgesetzt. Als Differenz zwischen jeweils zwei Phasen ergibt sich wieder ein sinusförmiges Ausgangssignal. Die Einschaltverhältnisse $\tau_a$, $\tau_b$, $\tau_c$ bewegen sich dabei entsprechend Fig. 4 (b) zwischen den Werten 0 und 1. Für jeweils 60° wird jeweils eine Phase getaktet, während die beiden anderen Phasen auf das untere bzw. auf das obere Zwischenkreispotential geklemmt sind.

Es wird insofern ersichtlich, dass durch eine Modulation der unipolaren Zwischenkreisspannung mit einem Wechselanteil der am Wechselspannungssystem angeschlossene Wechselrichter mit dem Modulationsverfahren einer Ein-Phasen-Taktung betrieben werden kann, ohne dass es zu einer Verzerrung der Grundwelle kommt. Der modulierte Zwischenkreis nimmt die für die Einschaltzeiten $\tau_a$, $\tau_b$, $\tau_c$ theoretisch geforderten Einschaltverhältnisse von > 1 auf. Dabei hat sich gezeigt, dass die durch die Spannungsschwankungen der Zwischenkreisspannung resultierenden Leistungsschwankungen am Zwischenkreiskondensator problemlos durch den elektrischen Teilnehmer oder ein Netzfilter ausgeglichen werden, sodass die Phasenströme im Wechselspannungssystem oberwellenarm bleiben.

In einer bevorzugten Ausgestaltung handelt es sich bei dem Wechselspannungssystem um ein dreiphasiges Drehspannungssystem, wobei die Zwischenkreisspannung mit einem Wechselanteil der sechsfachen Drehfrequenz moduliert wird.

Die Modulation der Zwischenkreisspannung kann über den weiteren elektrischen Teilnehmer oder mittels einer zusätzlichen Spannungs- und/oder Stromquelle erfolgen. Dabei kann die Modulation der Zwischenkreisspannung insbesondere über ein entsprechend geeignetes Steuermittel auch gesteuert werden. In einer bevorzugten Ausgestaltung jedoch wird ein Sollwert für die modulierte Zwischenkreisspannung vorgegeben, wobei die Zwischenkreisspannung auf den vorgegebenen Sollwert geregelt wird.

In einer hierzu besonders vorteilhaften Ausgestaltung werden als Stellgrößen für die Regelung der Zwischenkreisspannung die Schaltzeiten der Mittenabgriffe des Wechselrichters herangezogen. Mit anderen Worten ist in dieser bevorzugten Ausgestaltung vorgesehen, die modulierte Zwischenkreisspannung durch den mit dem Modulationsverfahren einer Ein-Phasen-Taktung betriebenen, am Wechselspannungssystem angeschlossenen Wechselrichter selbst zu regeln. Ein externer Eingriff durch Steuerung oder Regelung der Zwischenkreisspannung kann in diesem Fall entfallen. Die Modulation der Zwischenkreisspannung erfolgt durch eine aktive Einstellung der Schaltzeiten der Halbbrücken bzw. Mittenabgriffe des am Wechselspannungssystem angeschlossenen Wechselrichters. Der elektrische Teilnehmer kann unterstützend wirken, indem er seine Sollspannungen in auf den Sollwert der Zwischenkreisspannung normierte Einschaltverhältnisse umrechnet, und somit seine Leistungsentnahme auf eine Abweichung des Istwerts der Zwischenkreisspannung positiv rückkoppelt.

Die Erfindung geht dabei von der Überlegung aus, dass das Wechselspannungssystem wie eine Wechselstrommaschine betrachtet werden kann, die mit einer konstanten Drehzahl, nämlich der Frequenz des Wechselspannungssystems, betrieben wird. Ein Leistungsaustausch mit dem Spannungszwischenkreis erfordert in diesem Bild eine angepasste Steuerung der Phasenströme, die aufgrund der konstanten Drehfrequenz proportional zu dem jeweiligen Leistungsaustausch mit dem Spannungszwischenkreis werden. Mit anderen Worten bedeutet eine Leistungsanforderung durch den Spannungszwischenkreis - beispielsweise zur Umladung eines Zwischenkreiskondensators - höhere Phasenströme, die im Falle der Steuerung oder Regelung einer Wechselstrommaschine eine geänderte Spannungsanforderung bedingen. Eine geänderte Spannungsanforderung wiederum wird in einem durch Pulsweitenmodulation betriebenen Wechselrichter als Stellgrößen geänderte Schaltzeiten der Halbbrücken zur Folge haben.

Zweckmäßigerweise wird der Sollwert für jede modulierte Zwischenkreisspannung aus den Istwerten der Phasenspannungen des Wechselspannungssystems ermittelt, wobei durch einen Vergleich des Sollwerts der Zwischenkreisspannung mit dem Istwert der Zwischenkreisspannung auf einen Sollwert für den Leistungsaustausch mit dem Wechselspannungssystem geschlossen wird, und wobei die Schaltzeiten der Mittenabgriffe des Wechselrichters durch eine Leistungsregelung gestellt werden. In einer bevorzugten Variante hierzu wird der Sollwert für die modulierte Zwischenkreisspannung aus den Istwerten der Phasenspannungen des Wechselspannungssystems als Differenz aus dem jeweiligen Maximum und dem jeweiligen Minimum der Phasenspannungen ermittelt. Es kann leicht nachvollzogen werden, dass sich in einem Drehstromsystem, wobei drei sinusförmige Phasen zueinander jeweils um 120° versetzt sind, durch diese Funktion die mit einem Wechselanteil der sechsfachen Frequenz der Grundwelle modulierte Zwischenkreisspannung ergibt. Wird der sich aus den Phasenspannungen des Wechselspannungssystems ergebende Sollwert für die modulierte Zwischenkreisspannung mit dem aktuellen Istwert der Zwischenkreisspannung verglichen, so kann auf einen Sollwert für den Leistungsaustausch zwischen dem Wechselspannungssystem und dem Spannungszwischenkreis geschlossen werden. Dieser Sollwert wird als Eingangsparameter für eine Leistungsregelung des Wechselrichters herangezogen. Entsprechend diesem Sollwert erfolgt die Steuerung des Wechselrichters über die jeweiligen Schaltzeiten der Mittenabgriffe bzw. Halbbrücken.

Vorteilhafterweise wird der Sollwert für den Leistungsaustausch in Sollwerte für die Phasenströme umgesetzt, wobei die Schaltzeiten der Mittenabgriffe des Wechselrichters durch eine Stromregelung des Wechselrichters gestellt werden. In diesem Fall werden die aus dem Sollwert für den Leistungsaustausch mit dem Wechselspannungssystem ermittelten Phasenströme mit aktuellen Istwerten der Phasenströme im Wechselspannungssystem verglichen und entsprechend dieser Abweichung die Schaltzeiten des Wechselrichters gestellt.

In einer weiter zweckmäßigen Ausgestaltung ist die Stromregelung des Wechselrichters als eine feldorientierte Regelung ausgeführt. Dabei wird der Sollwert für den Leistungsaustausch unter der Annahme einer konstanten Drehfrequenz des Wechselspannungssystems in einen Sollwert für die drehmomentbildende Stromkomponente eines Stromraumzeigers im Wechselspannungssystem umgerechnet, wobei für die zur drehmomentbildenden Komponente senkrechte zweite (feldbildende) Komponente des Stromraumzeigers ein Sollwert für die Blindstrom-Grundwelle vorgegeben wird, und wobei aus einem Vergleich des Sollwertes des Stromraumzeigers und des Istwerts des Stromraumzeigers ein Stellwert für einen Spannungsraumzeiger ausgegeben wird, aus dem die Schaltzeiten der Mittenabgriffe errechnet werden. Bei einer feldorientierten Regelung eines Wechselrichters für eine Drehstrommaschine werden insbesondere die Systemgrößen Strom und Spannung - wie eingangs erwähnt - in rotierende Raumzeiger, also in Stromraumzeiger und Spannungsraumzeiger, umgerechnet, die in einem zweidimensionalen Koordinatensystem rotieren. Die Umrechnung erfolgt hierbei über bekannte mathematische Transformationen. Bei der feldorientierten Regelung findet insbesondere die momentbildende Stromkomponente $I_q$ des Stromraumzeigers I Beachtung, da diese das Drehmoment bzw. bei konstanter Drehzahl die Leistung der Drehstrommaschine bzw. des Wechselspannungssystems benennt. Durch Umrechnung der Raumzeigergrößen aus dem rotorfesten d, q-Koordinatensystem in das statorfeste $\alpha$, $\beta$-Koordinatensystem können die für eine jeweilige Leistungs- bzw. Stromanforderung notwendigen Phasenspannungen an den Mittenabgriffen des Wechselrichters ermittelt und über entsprechende Schaltzeiten der Mittenabgriffe eingestellt werden.

Vorteilhafterweise wird ein durch den elektrischen Teilnehmer geforderter zusätzlicher Leistungsaustausch im Sollwert für den Leistungsaustausch berücksichtigt. Insbesondere wird der für den Leistungsaustausch aus den Istwerten der Phasenspannungen des Wechselspannungssystems ermittelte Sollwert um den zusätzlichen Leistungsaustausch erhöht bzw. verringert. Dies ist beispielsweise erforderlich, wenn als elektrischer Teilnehmer eine Drehstrommaschine über einen weiteren Wechselrichter an dem Spannungszwischenkreis teilnimmt. Wird durch diese Drehstrommaschine ein Leistungsbedarf beispielsweise zum Erhalt einer konstanten Drehzahl angemeldet, so findet dieser Leistungsbedarf unmittelbar Eingang in die Regelung des am Wechselspannungssystem angeschlossenen Wechselrichters. Der Leistungsaustausch zwischen dem Wechselspannungssystem und der Drehstrommaschine bzw. dem elektrischen Teilnehmer erfolgt dann über den gemeinsamen Spannungszwischenkreis. Entsprechendes gilt umgekehrt bei einem Leistungsaustausch in das Wechselspannungssystem hinein, wie dies beispielsweise bei einem elektrischen Leistungslieferanten wie einem Solargenerator der Fall ist.

Weiter bevorzugt wird zur Berechnung des Sollwerts für die modulierte Zwischenkreisspannung aus den Istwerten der Phasenspannungen des Wechselspannungssystems die Übertragungsfunktion eines Netzfilters unter Einbeziehung des zusätzlichen Leistungsaustauschs berücksichtigt. Mit anderen Worten wird ein von dem elektrischen Teilnehmer angemeldeter Leistungsaustausch beispielsweise in Phasenströme des Wechselspannungssystems umgerechnet, die unter Betrachtung der Übertragungsfunktion des Netzfilters eine Änderung der am Wechselrichter anliegenden Phasenspannungen bewirken können. Diese geänderten Phasenspannungen fließen dann in die Berechnung des Sollwerts für die modulierte Zwischenkreisspannung ein. Demnach werden nicht unmittelbar die Urspannungen im Wechselspannungssystem zur Ermittlung des Sollwerts der modulierten Zwischenkreisspannung herangezogen. Vielmehr werden die aufgrund eines geforderten Leistungsaustauschs mit dem elektrischen Teilnehmer geänderten Phasenspannungen berücksichtigt.

Um die modulierte Zwischenkreisspannung mit den Schaltzeiten des Wechselrichters zu koppeln, ist zweckmäßigerweise weiter vorgesehen, aus den als Stellgrößen zur Regelung ermittelten theoretischen Schaltzeiten der Mittenabgriffe des Wechselrichters jeweils eine maximale theoretische Schaltzeit zu bestimmen, wobei die maximale theoretische Schaltzeit auf einen vorgegebenen Sollwert geregelt wird, und wobei als Stellgröße der Sollwert für die modulierte Zwischenkreisspannung angepasst wird. Mit anderen Worten wird hierdurch eine der Leistungsregelung überlagerte Regelung der Schaltzeiten mit geringer Dynamik implementiert. Insbesondere wird als Sollwert für die maximale theoretische Schaltzeit ein Wert von 1 vorgegeben. Ist die ermittelte maximale theoretische Schaltzeit größer als 1, so wird der Sollwert für die modulierte Zwischenkreisspannung entsprechend erniedrigt. Die Anpassung des Sollwerts für die modulierte Zwischenkreisspannung kann hierbei additiv oder multiplikativ erfolgen. Über die Ausregelung der maximalen Schaltzeit auf den Sollwert wird die Regelung der Zwischenkreisspannung im Hinblick auf das Modulationsverfahren der Ein-Phasen-Taktung des Wechselrichters optimiert.

In einer weiteren zweckmäßigen Ausgestaltung werden die als Stellgrößen zur Regelung ermittelten theoretischen Schaltzeiten der Mittenabgriffe des Wechselrichters mit einem Grenzwert verglichen, wobei bei Überschreiten des Grenzwerts die theoretischen Schaltzeiten jeweils auf einen Endwert gesetzt werden, wobei der Endwert dann als tatsächliche Schaltzeit verwendet wird. Durch Implementierung dieser Funktion wird eine Fangfunktion erzielt, wobei entsprechend Fig. 10 eine theoretisch ermittelte Schaltzeit, die einen vorgegebenen Grenzwert überschreitet, insbesondere auf die tatsächlich mögliche maximale Schaltzeit eines Wertes von 1 gesetzt wird. Damit wird die Regelung bzw. Steuerung des Wechselrichters sehr rasch auf das Modulationsverfahren der Ein-Phasen-Taktung gebracht. Bei Wirksamwerden der Fangfunktion bewegt sich der Spannungsraumzeiger entsprechend Fig. 10 ausschließlich am Rand des Hexagons. Dies entspricht dem Modulationsverfahren einer Ein-Phasen-Taktung, da auf dem Rand des Hexagons ausschließlich eine Phase getaktet wird. Ein Nullzeiger wird nicht hinzugeschaltet.

Vorteilhafterweise wird der Grenzwert mit einem Wert zwischen 95% und 98% des Endwerts gewählt. Sind die Schaltzeiten wie eingangs ausgeführt mit einem Wert zwischen 0 und 1 definiert, so ist der Grenzwert damit vorzugsweise größer als 0,95, und insbesondere kleiner als 0,98, gewählt.

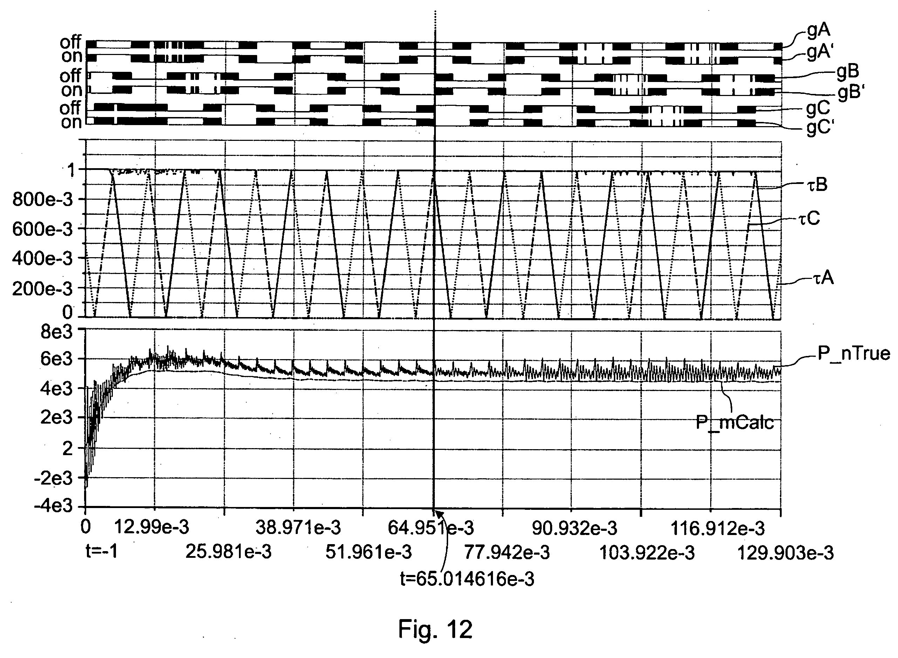

Bevorzugt werden die Schaltzeiten auf den Sollwert für die Zwischenkreisspannung normiert. Dies stellt eine Abweichung von einer regulären Regelung oder Steuerung eines Wechselrichters für eine Wechselstrommaschine dar, wobei zur Normierung der Schaltzeiten üblicherweise der Istwert der Zwischenkreisspannung herangezogen wird. Es hat sich gezeigt, dass bei einer Normierung der Schaltzeiten auf den Sollwert der Zwischenkreisspannung eine raschere Einregelung der Zwischenkreisspannung erfolgt. Bezug kann hierbei auf Figur 12 genommen werden, wobei zunächst auf den Sollwert und etwa ab der Hälfte des gezeigten Verlaufs auf den Istwert der Zwischenkreisspannung normiert wird.

Wie eingangs erwähnt, kann der elektrische Teilnehmer ein beliebiger Verbraucher oder eine beliebige Quelle von elektrischer Leistung sein. Bevorzugt umfasst der elektrische Teilnehmer einen getakteten Gleichspannungsumrichter oder einen weiteren Wechselrichter. Über den getakteten Gleichspannungsumrichter ist insbesondere ein Akkumulator oder ein Solargenerator an dem unipolaren Zwischenkreis angeschlossen. Über den weiteren Wechselrichter wird insbesondere ein elektrischer Verbraucher, bevorzugt eine Wechselstrommaschine, betrieben.

Bevorzugt wird der Wechselrichter mit dem Gleichspannungsumrichter bzw. mit dem weiteren Wechselrichter synchron getaktet, wobei der Istwert der Zwischenkreisspannung in gemeinsamen Freilaufphasen des Wechselrichters und des elektrischen Teilnehmers erfasst wird. Auf diese Weise ist eine problemlose Erfassung des Istwerts der Zwischenkreisspannung möglich, die ansonsten durch Schwebungsfrequenzen der PWM-Taktung ungünstig überlagert wäre. Zweckmäßigerweise unterscheidet sich die Taktfrequenz des Wechselrichters und des elektrischen Teilnehmers um ein ganzzahliges Vielfaches.

Die eingangs gestellte Aufgabe wird für eine Schaltung der eingangs genannten Art erfindungsgemäß dadurch gelöst, dass ein Steuergerät umfasst ist, welches eingerichtet ist, den Wechselrichter überwiegend nach dem Modulationsverfahren einer Ein-Phasen-Taktung zu betreiben und die Zwischenkreisspannung mit einem Wechselanteil derart zu modulieren, dass der Leistungsaustausch mit dem Wechselspannungssystem über oberwellenarme Phasenströme erfolgt.

Weitere vorteilhafte Ausgestaltungen können den auf eine Schaltung gerichteten Unteransprüchen entnommen werden. Dabei können die für das Verfahren jeweils genannten Vorteile sinngemäß auf die Schaltung übertragen werden.

Bevorzugt ist vom Steuergerät eine Regeleinheit für die modulierte Zwischenkreisspannung umfasst. Dabei ist die Regeleinheit vorteilhafterweise zur Einstellung der Schaltzeiten der Mittenabgriffe des am Wechselspannungssystem anschließbaren Wechselrichters ausgebildet.

In einer weiter bevorzugten Ausgestaltung umfasst die Regeleinheit zur Einstellung der Schaltzeiten einen unterlagerten Leistungsregler des Wechselrichters. Der unterlagerte Leistungsregler wiederum ist vorzugsweise als ein Stromregler für eine feldorientierte Regelung des Wechselrichters ausgebildet.

Vorteilhafterweise ist weiter dem Leistungsregler ein Zwischenkreisspannungsregler überlagert, der zur Erfassung und Ausgabe einer Zwischenkreisleistung eingerichtet ist. Zusätzlich kann ein überlagerter Schaltzeitenregler umfasst sein, der eingerichtet ist, als Stellgröße die Zwischenkreisspannung zu modifizieren. Dazu ist der unterlagerte Leistungsregler weiter bevorzugt eingerichtet, die theoretisch ermittelten Schaltzeiten bei Überschreiten eines Grenzwertes auf einen Endwert festzusetzen.

Als elektrische Teilnehmer sind an dem Spannungszwischenkreis bevorzugt ein getaktet betreibbarer Gleichspannungsumrichter oder ein weiterer getaktet betreibbarer Wechselrichter angeschlossen. Es kann auch eine Mehrzahl von elektrischen Teilnehmern an den gemeinsamen Zwischenkreis angeschlossen sein.

Vorteilhafterweise ist an dem getaktet betreibbaren Gleichspannungsumrichter ein Solargenerator oder ein Akkumulator angeschlossen. An dem weiteren getaktet betreibbaren Wechselrichter ist bevorzugt ein elektrischer Verbraucher, insbesondere eine Wechselstrommaschine, angeschlossen.

Ausführungsbeispiele der Erfindung werden anhand einer Zeichnung näher erläutert. Dabei zeigen:

Fig. 1: Prinzipschaltbilder für elektrische Teilnehmer, die über einen Wechselrichter an einem Wechselspannungssystem angeschlossen sind,

Fig. 2: eine Schaltung mit einem Wechselrichter, der an einem Wechselspannungssystem angeschlossen ist, und mit einem Wechselrichter, der an eine Wechselstrommaschine angeschlossen ist, wobei sich beide Wechselrichter einen Spannungszwischenkreis teilen,

Fig. 3: den jeweils zeitlichen Verlauf der Einschalt-verhältnisse der Halbbrücken eines Wechsel-richters, des gewählten Nullsystems und des Phasendifferenzsignals für ein Modulationsverfahren einer Zwei-Phasen-Taktung bei konstanter Zwischenkreisspannung,

Fig. 4: den jeweils zeitlichen Verlauf der Phasenspannungen eines Wechselrichters und der Einschaltverhältnisse seiner Halbbrücken bei einem Modulationsverfahren der Ein-Pha-sen-Taktung mit modulierter Zwischenkreis-spannung,

Fig. 5: schematisch die Kontrolleinrichtungen zur Regelung der Zwischenkreisspannung für eine Schaltung entsprechend Fig. 2,

Fig. 6: schematisch einen Sollwertgeber zur Vorgabe eines leistungsbezogenen Sollwerts für die Zwischenkreisspannung,

Fig. 7: schematisch einen Schaltzeitenregler zur Regelung der maximalen Schaltzeiten der Halbbrücken auf einen Sollwert,

Fig. 8: einen Zwischenkreisspannungsregler zur Berücksichtigung einer Leistungsanforderung eines elektrischen Teilnehmers am Spannungszwischenkreis,

Fig. 9: schematisch eine feldorientierte Raumzeigeregelung für einen Wechselrichter,

Fig. 10: ein Hexagon der Raumzeigermodulation mit eingezeichneter Fangfunktion,

Fig. 11: jeweils den zeitlichen Verlauf verschiedener Systemgrößen bei der Regelung einer modulierten Zwischenkreisspannung für eine Schaltung entsprechend Fig. 2 bei einer konstanten Leistungsanforderung durch den elektrischen Teilnehmer und

Fig. 12: den zeitlichen Verlauf jeweils verschiedener Systemgrößen bei einer Regelung der Zwi-schenkreisspannung einer Schaltung ent-sprechend Fig. 2.

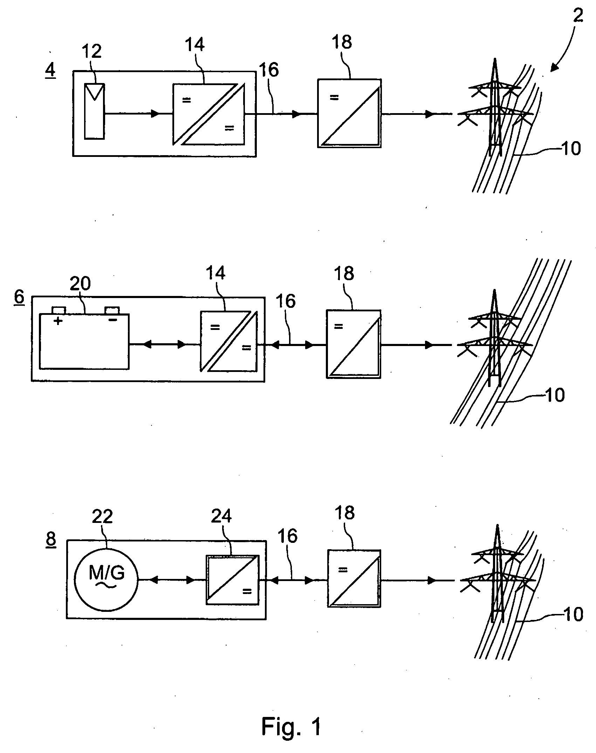

In Fig. 1 sind Prinzipschaltbilder von Teilnehmern 4, 6, 8 gezeigt, die jeweils an ein Wechselspannungssystem 10 angeschlossen sind. Das Wechselspannungssystem 10 ist beispielsweise ein Drehstrom-Haushaltsnetz. Die Versorgungsleitungen des Wechselspannungssystems 10 sind schematisch dargestellt.

Die elektrischen Teilnehmer 4, 6, 8 sind jeweils über einen Wechselrichter 18 an das Wechselspannungssystem 10 angeschlossen. Der Wechselrichter 18 ist dabei über schaltbare Halbbrücken mit Mittenabgrif-fen zwischen einen unipolaren Spannungszwischen-kreis 16 und dem Wechselspannungssystem 10 geschaltet. Durch eine entsprechende Taktung der Schaltelemente in den Halbbrücken übt der Wechselrichter 18 eine aktive Gleichrichterfunktion aus. Umgekehrt wirkt er als ein Wechselrichter aus dem unipolaren Spannungszwischenkreis 16 in das Wechselspannungssystem 10 hinein.

Die elektrischen Teilnehmer 4, 6, 8 teilen sich mit dem Wechselrichter 18 den unipolaren Spannungszwischenkreis 16. Der erste Teilnehmer 4 ist als ein Solargenerator 12 ausgebildet. Über einen Gleichspannungsumrichter 14 (bekannt auch als sogenannter DC-DC-Wandler) kann elektrische Leistung vom Solargenerator 12 über den unipolaren Spannungszwischenkreis 16 mittels des Wechselrichters 18 in das Wechselspannungssystem 10 übertragen werden. Der zweite Teilnehmer 6 ist als ein Akkumulator 20 ausgebildet. Über den Gleichspannungsumrichter 14 und den Wechselrichter 18 kann elektrische Leistung zwischen dem Akkumulator 20 und dem Wechselspannungssystem 10 in beide Richtungen übertragen werden.

Der dritte elektrische Teilnehmer 8 ist als eine Wechselstrommaschine 22 ausgebildet. Die Wechselstrommaschine 22 ist über einen getaktet betreibbaren Wechselrichter 24 an dem unipolaren Spannungszwischenkreis 16 angeschlossen. Im motorischen Betrieb entnimmt die Wechselstrommaschine 22 über den Spannungszwischenkreis 16 elektrische Leistung aus dem Wechselspannungssystem 10. Im generatorischen Betrieb wird elektrische Leistung von der Wechselstrommaschine 22 über den Spannungszwischenkreis 16 in das Wechselspannungssystem 10 übertragen.

In Fig. 2 ist eine Schaltung 30 zum Austausch von elektrischer Leistung zwischen einem mehrphasigen Wechselspannungssystem 10 und einem elektrischen Teilnehmer 8 dargestellt. Ein mehrphasiger Wechselrichter 18 ist mit schaltbaren Halbbrücken 40, 41, 42 in einen Spannungszwischenkreis 16 geschaltet. Ein Zwischenkreiskondensator 35 ist zwischen die obere Zwischenkreisschiene 36 und die untere Zwischenkreisschiene 37 des Spannungszwischenkreises 16 geschaltet.

Über die Mittenabgriffe 50, 51, 52 der Halbbrücken 40, 41, 42 ist der Wechselrichter 18 an die Phasen R, S, T des Wechselspannungssystems 10 angeschlossen. Zwischen dem Wechselrichter 18 und dem Wechselspannungssystem 10 ist in die Phasen ein als L-C-L-Filter ausgebildeter Netzfilter 60 geschaltet. Kapazitäten C, Widerstände R und Induktivitäten L sind entsprechend eingezeichnet.

Der elektrische Teilnehmer 8 umfasst einen weiteren schaltbaren Wechselrichter 24, der ebenfalls über schaltbare Halbbrücken 40, 41, 42 an die obere Zwischenkreisschiene 36 und die untere Zwischenkreisschiene 37 des Spannungszwischenkreises 16 angeschlossen ist. Wechselrichter 18 und Wechselrichter 24 teilen sich somit den Spannungszwischenkreis 16.

Über die Mittenabgriffe 50, 51, 52 der Halbbrücken 40, 41, 42 ist der weitere Wechselrichter 24 an die Phasen U, V, W einer Wechselstrommaschine 22 angeschlossen.

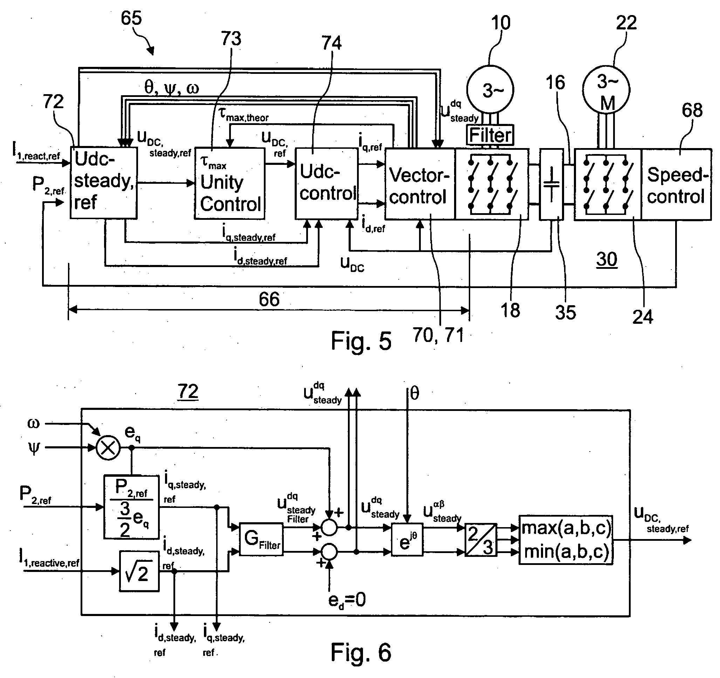

Jede der Halbbrücken 40, 41, 42 der beiden Wechselrichter 18, 24 umfasst zwei in Serie geschaltete Schaltelemente, zu denen jeweils eine Freilaufdiode parallel angeordnet ist. Über ein Steuergerät 66 werden die Schaltelemente der Halbbrücken 40, 41, 42 mittels Pulsweitenmodulation zur Ausgabe gewünschter Spannungen an den Phasen A, B, C bzw. U, V, W angesteuert. Dabei werden die Mittenabgriffe 50, 51, 52 des jeweiligen Wechselrichters 18, 24 abwechselnd an die obere Zwischenkreisschiene 36 und an die untere Zwischenkreisschiene 37 geklemmt. Das Steuergerät 66 entsprechend Fig. 2 ist zusätzlich zu einer Regelung der Zwischenkreisspannung des Spannungszwischenkreises 16 ausgebildet. Dies wird anhand der Figuren 5 bis 10 ersichtlich.

Auf die Fig. 3 bis 4 ist bereits in der vorausgegangen Beschreibung verwiesen, worauf entsprechend Bezug genommen wird.

In Fig. 5 ist beispielhaft ein Regelschema zu einem Leistungsaustausch zwischen dem Wechselspannungssystem 10 und einem elektrischen Verbraucher 8 nach einer Schaltung entsprechend Fig. 2 dargestellt, wobei der Wechselrichter 18 auf der Seite des Wechselspannungssystems 10 mit dem Modulationsverfahren einer Ein-Phasen-Taktung betrieben wird, und wobei die Zwischenkreisspannung des Spannungszwischenkreises 16 mit einem Wechselanteil derart moduliert wird, dass der Leistungsaustausch mittels oberwellenarmer Phasenströme erfolgt.

In Fig. 5 ist die Schaltung entsprechend Fig. 2 vereinfacht dargestellt. Man erkennt auf der rechten Bildhälfte den Spannungszwischenkreis 16 mit Zwischenkreiskondensator 35. An dem Spannungszwischenkreis 16 ist der Wechselrichter 18 sowie der weitere Wechselrichter 24 angeschlossen. Die Mittenabgriffe des Wechselrichters 18 sind mit dem Wechselspannungssystem 10 verbunden. Das Netzfilter in den Phasen ist dargestellt. Der weitere Wechselrichter 24 ist mit seinen Mittenabgriffen an eine elektrische Wechselstrommaschine 22 angeschlossen.

Das Steuergerät 66 ist zu einer Regelung der modulierten Zwischenkreisspannung ausgebildet. Als einen wesentlichen Eingangsparameter erhält das Steuergerät 66 eine Leistungsanforderung $P_{2,ref}$ aus einer Geschwindigkeitssteuerung 68 des maschinenseitigen Wechselrichters 24.

Im Einzelnen umfasst das Steuergerät 66 eine feldorientierte Raumzeigeregelung 70 zur Einstellung der Schaltzeiten der Mittenabgriffe des Wechselrichters 18. Die feldorientierte Raumzeigeregelung 70 ist hierbei als ein Stromregler 71 vorgegeben, der im d, q - Koordinatensystem Sollwerte ($I_{q,ref}$ ; $I_{d,ref}$) des Stromraumzeigers mit Istwerten ($I_q$; $I_d$) vergleicht, und hieraus über Rücktransformation in das motorfeste α, β - Koordinatensystem Stellwerte für die Phasenspannungen ermittelt, entsprechend derer Steuersignale an die Schaltelemente des Wechselrichters 18 ergehen, über die die Schaltzeiten der Mittenabgriffe gestellt werden.

Weiter ist vom Steuergerät 66 ein Sollwertgeber 72 zur Vorgabe eines vorläufigen Sollwerts $U_{DC,steady,ref}$ für die modulierte Zwischenkreisspannung $U_{DC}$ umfasst. Der Sollwertgeber 72 erhält hierbei als Eingangsgröße den Sollwert $P_{2,ref}$ für einen notwendigen Leistungsaustausch mit der Wechselstrommaschine 24. Der Sollwert $P_{2,ref}$ für den Leistungsaustausch wird hierbei von dem Geschwindigkeitsregler 68 angegeben. Diese Leistungsanforderung kann aufgrund der konstanten Drehfrequenz des Wechselspannungssystems 10 von dem Sollwertgeber 72 unmittelbar in einen vorläufigen Sollwert $I_{q,steady,ref}$ der momentbildenden Stromkomponente im d, q - Koordinatensystem umgerechnet werden. Durch den Benutzer erfolgt weiter durch die Vorgabe eines Effektivwerts $I_{l,reactive,ref}$ für den Grundwellen-Blindstrom im Wechselspannungssystem 10 eine Vorgabe für einen vorläufigen Sollwert $I_{d,steady,ref}$ der feldbildenden Komponente $I_d$ im d, q - Koordinatensystem.

Zusätzlich ist von dem Steuergerät 66 ein Schaltzeitenregler 73 erfasst. Dieser vergleicht in der feldorientierten Regelung 70 theoretisch ermittelte Schaltzeiten, insbesondere eine jeweils ermittelte maximale Schaltzeit $τ_{max,theor}$, mit einem Sollwert und passt bei Abweichung als Stellgröße den vorläufigen Sollwert $U_{DC,steady,ref}$ entsprechend an. Durch den Schaltzeitenregler 73 wird insbesondere erreicht, dass die maximale Schaltzeit $τ_{max,theor}$ auf das maximal mögliche Einschaltverhältnis von 1 geregelt wird. Wird in der feldorientierten Raumzeigerregelung 70 zugleich vorgegeben, dass stets eine der Phasen auf das untere Zwischenkreispotential des Spannungszwischenkreises 16 geklemmt wird, so führt dies rasch zu einer Einregelung eines Modulationsverfahren der Ein-Phasen-Taktung. Die Vorgabe einer Klemmung jeweils einer Phase auf das untere Zwischenkreispotential (minimales Einschaltverhältnis $τ_{min}$ = 0) ist im Übrigen gängige Praxis bei einer feldorientierten Raumzeigeregelung.

In dem Zwischenkreisspannungsregler 74 des Steuergeräts 66 erfolgt schließlich unter Berücksichtigung des vom Spannungszwischenkreis 16 benötigten Leistungsaustausches die Ermittlung der endgültigen Vorgaben des Sollwerts ($I_{q,ref}$; $I_{d,ref}$) des Stromraumzeigers, der als Eingangsgröße der Raumzeigerregelung 70 zugeführt wird. In dem Zwischenkreisspannungsregler 74 wird hierbei insbesondere der ermittelte Sollwert $U_{DC,ref}$ mit dem Istwert $U_{DC}$ der Zwischenkreisspannung verglichen. Eine Abweichung bedeutet einen notwendigen Leistungsaustausch zwischen dem Wechselspannungssystem 10 und dem Spannungszwischenkreis 16. Ein solcher Leistungsaustausch kann auch als "Ripple-Leistung" bezeichnet werden. Diese "Ripple-Leistung" ist eine Folge der Modulation der Zwischenkreisspannung mit einem Wechselanteil und wird beispielsweise zur Umladung des Zwischenkreiskondensators 35 benötigt.

In Fig. 6 ist schematisch mit größerem Detail der Sollwertgeber 72 für einen vorläufigen Sollwert $U_{DC,steady,ref}$ dargestellt. Dabei wird aus dem Sollwert $P_{2,ref}$ des elektrischen Teilnehmers unter Hinzuziehung der induzierten Komponente $e_q$ des Urspannungsraumzeigers des Wechselspannungssystems 10 (resultierend aus der Flussverkettung $\psi$ und der Drehfrequenz w) im Wechselspannungssystem 10 ein vorläufiger Sollwert $I_{q,steady,ref}$ für die "Drehmoment", respektive Wirkleistung bildende Komponente des Stromraumzeigers im d, q - Koordinatensystem ermittelt. Aus der Vorgabe des Effektivwerts für den Grundwellen-Blindstrom $I_{l,reactive,ref}$ folgt die Ermittlung eines Sollwerts $I_{d,steady,ref}$ der "feldbildenden", respektive Blindleistung bildenden Komponente des Stromraumzeigers. Unter Berücksichtigung der Übertragungsfunktion G eines Netzfilters (siehe Bezugszeichen 60 in Fig. 2) wird aus den vorläufigen Sollwerten des Stromraumzeigers ein vorläufiger Filterspannungsverlust ($U_{d,steady,filter}$; $U_{q,steady,filter}$) des Spannungsraumzeigers im d, q - Koordinatensystem ermittelt. Durch Addition des Urspannungsraumzeigers ($e_q$; $e_d$) im Wechselspannungssystem 10 resultiert ein am Wechselrichter 18 anliegender Spannungsraumzeiger ($U_{d,steady}$; $U_{q,steady}$), der unter Transformation in das $\alpha$, $\beta$ - Koordinatensystem und Umrechnung in die am Wechselrichter anliegenden Phasenspannungen $U_a$, $U_b$, $U_c$ für die Berechnung eines vorläufigen Sollwerts $U_{DC,steady,ref}$ der modulierten Zwischenkreisspannung $U_{DC}$ herangezogen wird. Der vorläufige Sollwert $U_{DC,steady,ref}$ für die modulierte Zwischenkreisspannung wird hierbei aus den derart ermittelten Phasenspannungen $U_a$, $U_b$, $U_c$ durch die Funktion Max ($U_a$, $U_b$, $U_c$) - Min ($U_a$, $U_b$, $U_c$) ermittelt.

In einer alternativen Ausführungsvariante wird auf die Berücksichtigung der Übertragungsfunktion G des Netzfilters 60 verzichtet. In diesem Fall erfolgt die Ermittlung des vorläufigen Sollwerts $U_{DC,steady,ref}$ für die modulierte Zwischenkreisspannung ausschließlich aus dem Istwert des Urspannungsraumzeigers ($e_q$; $e_d$) im Wechselspannungssystem 10.

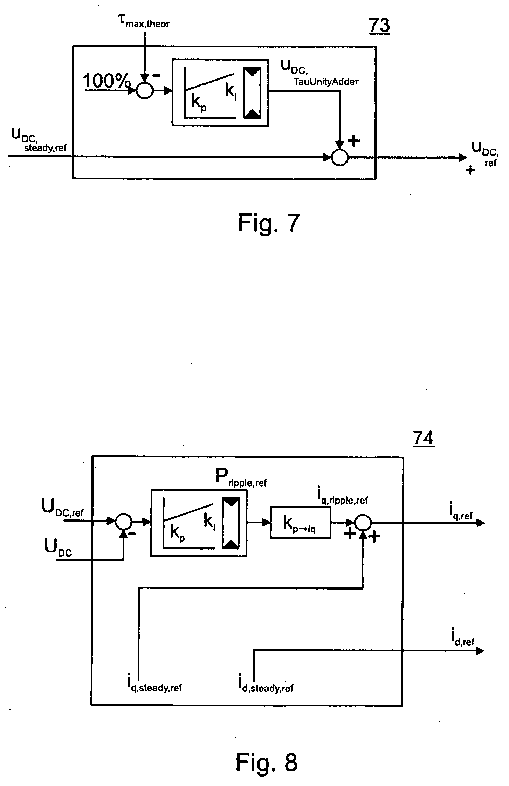

In Fig. 7 ist der Schaltzeitenregler 73 des Steuergeräts 66 näher dargestellt. Als eine Regelgröße regelt der Schaltzeitenregler 73 die aus den Schaltzeiten in der Raumzeigeregelung 70 jeweils ermittelte maximale theoretische Schaltzeit $\tau_{max,theor}$ auf einen vorgegeben Sollwert. Wird von einer Definition der Schaltzeiten wie vorbeschrieben ausgegangen, so wird die jeweils ermittelte maximale theoretische Schaltzeit $\tau_{max,theor}$ auf einen Wert von 1 geregelt. Hierzu wird die jeweils maximal ermittelte theoretische Schaltzeit $\tau_{max,theor}$ mit dem vorgegebenen Sollwert verglichen. Bei einer festgestellten Differenz wird als Stellgröße der vorläufige ermittelte Sollwert $U_{DC,steady,ref}$ für die modulierte Zwischenkreisspannung entsprechend erhöht oder erniedrigt. Dargestellt ist eine Ausführungsvariante des Schaltzeitenreglers 73, wobei bei einer über dem maximalen Einschaltverhältnis von 1 liegenden maximalen Schaltzeit $\tau_{max,theor}$ dem vorläufigen Sollwert $U_{DC,steady,ref}$ der modulierten Zwischenkreisspannung ein entsprechender Wert aufaddiert wird. Durch den Schaltzeitenregler 73 ist die Leistungs- bzw. Stromregelung in der feldorientierten Raumzeigeregelung 70 mit einer geringeren Dynamik unterlagert.

Fig. 8 zeigt im größeren Detail den Zwischenkreisspannungsregler 74 des Steuergeräts 66 entsprechend Fig. 5. Der durch die überlagerte Schaltzeitenregelung 73 ermittelte Sollwert $U_{DC,ref}$ für die modulierte Zwischenkreisspannung wird in dem Zwischenkreisspannungsregler 74 mit dem Istwert der Zwischenkreisspannung $U_{DC}$ verglichen. Aus einer Abweichung resultiert ein Stellbedarf für die Regelung. Für diesen Stellbedarf wird der benötigte Leistungsaustausch zwischen dem Wechselspannungssystem 10 und dem Spannungszwischenkreis 16 ermittelt. Dieser Leistungsaustausch, vorliegend mit $P_{ripple,ref}$ bezeichnet, resultiert aus der notwendigen Leistung zur Modulation der Zwischenkreisspannung mit einem Wechselanteil.

Im Zwischenkreisspannungsregler 74 wird durch Vergleich des Sollwerts $U_{DC,ref}$ mit dem Istwert $U_{DC}$ der modulierten Zwischenkreisspannung ein Sollwert für die sogenannte "Ripple-Leistung" ermittelt. Wie bereits beschrieben, wird diese Ripple-Leistung beispielhaft in einer feldorientierten Regelung unter Berücksichtigung der konstanten Drehfrequenz des Wechselspannungssystems in einen zusätzlichen Anteil $I_{q,ripple,ref}$ in der momentbildenden, respektive Wirkleistung bildenden Komponente $I_q$ des Stromraumzeigers im d, q - Koordinatensystem umgerechnet. Dieser Anteil in der momentbildenden, respektive Wirkleistung bildenden Komponente $I_q$ wird dem aus dem Leistungsaustausch mit dem elektrischen Teilnehmer ermittelten Anteil $I_{q,steady,ref}$ aufaddiert. Als Ausgangsgrößen des Zwischenkreisspannungsreglers 74 resultieren die Sollwerte ($I_{q,ref}$; $I_{d,ref}$) für den Stromraumzeiger im d, q - Koordinatensystem. Diese Sollwerte werden als Eingangsgrößen der feldorientierten Raumzeigerregelung 70 zugeführt.

In Fig. 9 ist schematisch die feldorientierte Raumzeigeregelung 70, 71 dargestellt. Aus den realen Phasenströmen $I^{abc}$ und Phasenspannungen $U^{abc}$ des Wechselspannungssystems 10 ermittelt die feldorientierte Raumzeigeregelung 70 den Stromraumzeiger $I^{\alpha\beta}$ und den Spannungsraumzeiger $U^{\alpha\beta}$ im statorfesten Bezugssystem. Aus diesen Größen oder mittels eines geeigneten Sensors kann die Phasenlage $\theta$, die Drehfrequenz $\omega$ und die Flussverkettung $\psi$ ermittelt bzw. abgeleitet werden. Durch eine weitere Transformation (dargestellt durch den Versor $e^{j\theta}$) wird der Stromraumzeiger $I^{\alpha\beta}$ in den Stromraumzeiger $I^{dq}$ im rotierenden d, q - Koordinatensystem umgerechnet. Mit dem hieraus resultierenden Istwerten ($I_q$; $I_d$) des Stromraumzeigers werden die Sollwerte ($I_{q,ref}$; $I_{d,ref}$) verglichen. Aus einer Abweichung resultiert als Stellgröße der Spannungsraumzeiger $U^{dq}_{ref}$. Dieser Spannungsraumzeiger wird mathematisch in den Spannungsraumzeiger $U^{\alpha\beta}_{ref}$ im $\alpha$, $\beta$ - Koordinatensystem umgerechnet. Hieraus können die Stellgrößen für die Phasenspannungen $U_a$, $U_b$, $U_c$ im Wechselrichter 18 und somit dessen anzusteuernden Schaltzeiten ermittelt werden.

In der feldorientierten Raumzeigeregelung 70 entsprechend Fig. 9 ist zusätzlich eine Fangfunktion SVM für die ermittelten theoretischen Schaltzeiten $\tau$ implementiert. Diese Fangfunktion SVM setzt bei Überschreiten eines vorgegebenen Grenzwerts durch eine theoretisch ermittelte Schaltzeit $\tau$ diese Schaltzeit auf einen vorgegebenen Endwert hoch. Im vorliegenden Kontext wird insbesondere eine theoretische Schaltzeit mit einem Wert von größer als 0,97 auf einen Wert von 1 hochgesetzt, was dann einer dauerhaften Klemmung der entsprechenden Phase bzw. Halbbrücke an die obere Zwischenkreisschiene 36 des Spannungszwischenkreises 16 entspricht.

In Fig. 10 ist die implementierte Fangfunktion an einem Hexagon 75 der Raumzeigermodulation veranschaulicht. Überschreitet eine theoretisch ermittelte Schaltzeit $\tau$ einen vorgegebenen Grenzwert, so wird diese Schaltzeit $\tau$ auf einen Wert von 1 gesetzt. Der mit der ursprünglichen Schaltzeit $\tau$ korrelierte Raumzeiger $U^{\alpha\beta}_{ref}$ wird im Hexagon 75 auf den Rand des Hexagons hochgesetzt. Der Raumzeiger im $\alpha$, $\beta$ - Koordinatensystem verändert sich auf $U^{\alpha\beta}_{ref,snapped}$. Derjenige Bereich, in dem die Fangfunktion implementiert ist, ist gestrichelt dargestellt.

Durch die Implementierung der Fangfunktion wird im beschriebenen Regelungsverfahren erreicht, dass der Wechselrichter 18 rasch in das Modulationsverfahren einer Ein-Phasen-Taktung eingeregelt wird. Wird der Spannungsraumzeiger ab Überschreiten eines vorgegebenen Grenzwerts durch die entsprechende Schaltzeit im Hexagon 75 entsprechend Fig. 10 auf den Rand festgesetzt, so wird nur noch eine Phase getaktet. Das Hinzufügen eines Nullvektors (0,0,0) oder (1,1,1) ist nicht mehr notwendig.

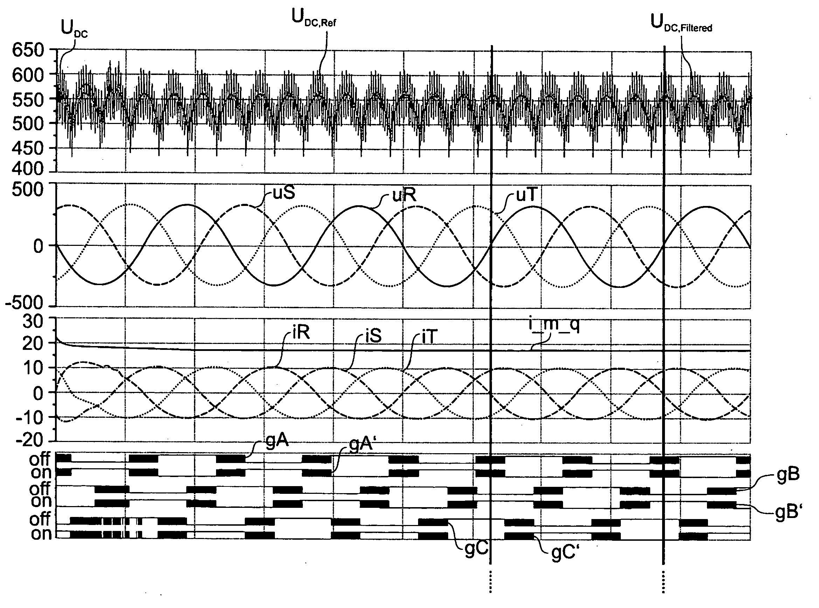

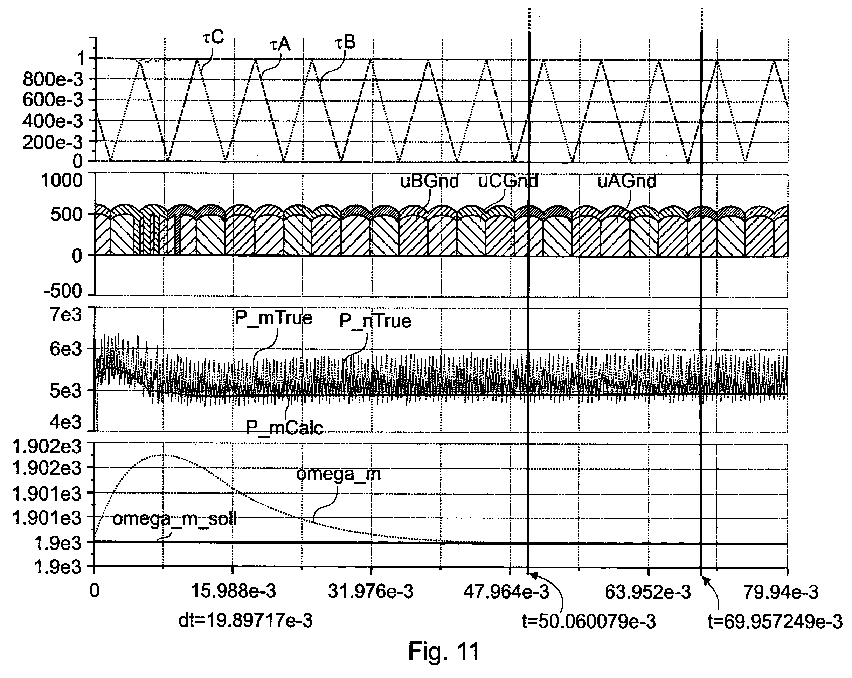

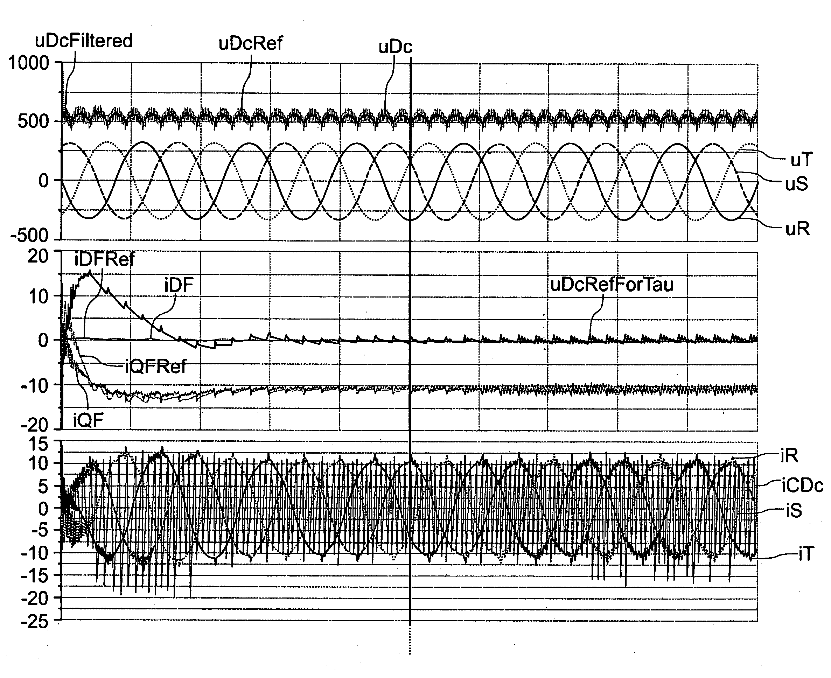

In Fig. 11 sind die zeitlichen Verläufe einiger Systemgrößen der vorbeschriebenen Regelung Zwischenkreisspannung in einer Schaltung 30 entsprechend Fig. 2 dargestellt.

Gemäß dem untersten Verlauf (h) fordert die Geschwindigkeitsregelung 68 der Wechselstrommaschine 22 (siehe Fig. 5) einen Leistungsaustausch an. Der benötigte Leistungsaustausch ist durch eine konstante Solldrehzahl bei 1.9e3 im Verlauf (h) angezeigt. Die wie vorbeschrieben implementierte Regelung der modulierten Zwischenkreisspannung unter gleichzeitigem Betrieb des wechselspannungssystemseitigen Wechselrichters 18 mit dem Modulationsverfahren der Ein-Phasen-Taktung regelt die Solldrehzahl mit einem anfänglichen Überschwinger ein.

Im zeitlichen Verlauf (g) meldet der Geschwindigkeitsregler 68 der Wechselstrommaschine 22 den zum Erreichen der konstanten Drehzahl notwendigen Leistungsbedarf $P_{2,ref}$ an. Im eingeschwungenen Zustand wird dem Wechselspannungssystem 10 etwa 5kW Leistung entnommen. Die Ripple-Leistung $P_{ripple,ref}$ für das Umladen des Zwischenkreiskondensators 35 wird teilweise dem Wechselspannungssystem 10 entnommen.

Aus den zeitlichen Verläufen (d) - (f) können die Schaltsignale an die Halbbrücken 40,41,42 des Wechselrichters 18 (Verlauf d), die Schaltzeiten bzw. Einschaltverhältnisse der jeweiligen Halbbrücken 40, 41, 42 (Verlauf e) und die Klemmenspannungen am Wechselrichter 18 gegen das Bezugspotential des Zwischenkreises 16 (Verlauf f) entnommen werden. Man erkennt, dass sich das Betriebsverfahren des Wechselrichters 18 äußerst rasch auf das Modulationsverfahren der Ein-Phasen-Taktung einregelt. Die Einschaltverhältnisse entsprechend dem Verlauf (e) laufen rasch linear zwischen 0 und 1, wobei jeweils nur eine Phase für 60° getaktet wird. Dies wird auch ersichtlich an den Schaltsignalen für die jeweiligen Halbbrücken entsprechend dem Verlauf (d).

Im Verlauf (c) sind die Phasenströme $I_r$, $I_s$, $I_t$ im Wechselspannungssystem 10 erkennbar. Der Verlauf der Netzspannungen $U_r$, $U_s$, $U_t$ ist im Verlauf (b) erkennbar. Es wird ersichtlich, dass die Phasenströme weitestgehend sinusförmig sind. Zu den Phasenspannungen des Wechselspannungssystems 10 sind sie gegenphasig.

Im Verlauf (a) wird der vom wechselspannungssystemseitigen Wechselrichter 18 errechnete Sollwert $U_{DC,ref}$; (durchgezogene Kurvenlinie) ersichtlich. Die tatsächliche Zwischenkreisspannung $U_{DC}$ ist durch die mit stärkerer Amplitude schwankende weitere Linie erkennbar. Die tatsächliche Zwischenkreisspannung schwankt mit einem starken Ripple aufgrund der Taktung der beiden Wechselrichter 18, 24.

In Fig. 12 sind die zeitlichen Verläufe einiger Systemgrößen entsprechend Fig. 11 dargestellt. Dabei wird entsprechend Verlauf (g) zunächst ein erhöhter Leistungsaustausch von der Stromregelung 68 entsprechend Fig. 5 angemeldet. Bis zur durchgezogenen senkrechten Mittenlinie werden hierbei die Schaltzeiten des drehstrommaschinenseitigen Umrichters 24 auf den aus der Regelung vorgegebenen Sollwert $U_{DC,ref}$ für die modulierte Zwischenkreisspannung normiert. Anschließend wird auf den tatsächlichen Istwert der Zwischenkreisspannung $U_{DC}$ normiert.

Aus den Verläufen (e) und (f) wird wiederum ersichtlich, dass sich das Betriebsverfahren des wechselspannungssystemseitigen Wechselrichters 18 rasch auf das Modulationsverfahren einer Ein-Phasen-Taktung einregelt. Auch die Netzströme $I_r$, $I_s$, $I_t$ entsprechend

dem Verlauf (d) regeln sich rasch auf eine sinusförmige Schwingung.

Der entsprechende Spannungsverlauf der Phasenspannungen $U_r$, $U_s$, $U_t$ im Wechselspannungssystem 10 sowie des Sollwerts und des Istwert der Zwischenkreisspannung $U_{DC}$ im Verlauf (d) und (c) ist ebenfalls erkennbar.

Aus dem zeitlichen Verlauf (c) wird weiter der Verlauf des Sollwerts $U_{DC,Tau\ Unitiy\ Adder}$ in dem Schaltzeitenregler 73 entsprechend Fig. 7 ersichtlich (obere Kurve). Zusätzlich ist der Verlauf des Sollwerts $I_{q,ref}$ für die drehmomentbildende Komponente $I_q$ im d,q-Koordinatensystem ausgegeben (untere Kurve). Man erkennt, dass sich beide Sollwerte rasch einregeln.

**Bezugszeichenliste**

| | |
|---|---|
| 4, 6, 8 | Teilnehmer |
| 10 | Wechselspannungssystem |
| 12 | Solargenerator |
| 14 | Gleichspannungsumrichter |
| 16 | Spannungszwischenkreis |
| 18 | Wechselrichter |
| 20 | Akkumulator |
| 22 | Wechselstrommaschine |
| 24 | Wechselrichter |
| 30 | Schaltung |
| 34 | Spannungszwischenkreis |
| 35 | Zwischenkreiskondensator |
| 36 | obere Zwischenkreisschiene |
| 37 | untere Zwischenkreisschiene |
| 40, 41, 42 | Halbbrücken |
| 50, 51, 52 | Mittenabgriffe |
| 60 | Netzfilter L-C-L |
| 62 | Drosseln |
| 65 | Regeleinheit |
| 66 | Steuergerät |
| 68 | Geschwindigkeitsregler |
| 70 | Feldorientierte Raumzeigerregelung |
| 71 | Stromregler |
| 72 | Sollwertgeber |
| 73 | Schaltzeitenregler |
| 74 | Zwischenkreisspannungsregler |
| 75 | Hexagon |

**Patentansprüche**

1. Verfahren zum Austausch von Leistung zwischen einem mehrphasigen Wechselspannungssystem (10) und einem elektrischen Teilnehmer (4, 6, 8) über einen unipolaren Spannungszwischenkreis (16), wobei sich ein über Mittenabgriffe (50, 51, 52) von schaltbaren Halbbrücken (40, 41, 42) an dem Wechselspannungssystem (10) angeschlossener mehrphasiger Wechselrichter (18) den Spannungszwischenkreis (16) mit dem elektrischen Teilnehmer (4, 6, 8) teilt, durch getaktetes Schalten der Mittenabgriffe (50, 51, 52) zwischen einer oberen Zwischenkreisschiene (36) und einer unteren Zwischenkreisschiene (37) des Spannungszwischenkreises (16), **dadurch gekennzeichnet, dass** der Wechselrichter (18) überwiegend nach dem Modulationsverfahren einer Ein-Phasen-Taktung betrieben wird, wobei die Zwischenkreisspannung ($U_{DC}$) mit einem Wechselanteil derart moduliert wird, dass der Leistungsaustausch mit dem Wechselspannungssystem (10) über oberwellenarme Phasenströme ($I_R$, $I_S$, $I_T$) erfolgt.

2. Verfahren nach Anspruch 1, **dadurch gekennzeichnet, dass** für ein Drehspannungssystem die Zwischenkreisspannung ($U_{DC}$) mit einem Wechselanteil der sechsfachen Drehfrequenz moduliert wird.

3. Verfahren nach Anspruch 1 oder 2, **dadurch gekennzeichnet, dass** ein Sollwert ($U_{DC,ref}$) für die modulierte Zwischenkreisspannung ($U_{DC}$) vorgegeben wird, und dass die Zwischenkreisspannung ($U_{DC}$) auf den vorgegebenen Sollwert ($U_{DC,ref}$) geregelt wird.

4. Verfahren nach Anspruch 3, **dadurch gekennzeichnet, dass** als Stellgrößen für die Regelung der Zwischenkreisspannung ($U_{DC}$) die Schaltzeiten ($\tau_a$, $\tau_b$, $\tau_c$) der Mittenabgriffe (50, 51, 52) des Wechselrichters (18) herangezogen werden.

5. Verfahren nach Anspruch 3 oder 4, **dadurch gekennzeichnet, dass** der Sollwert ($U_{DC,ref}$) für die modulierte Zwischenkreisspannung ($U_{DC}$) aus den Istwerten der Phasenspannungen ($U_a$, $U_b$, $U_c$) des Wechselspannungssystems (10) ermittelt wird, dass durch einen Vergleich des Sollwerts der Zwischenkreisspannung ($U_{DC}$) mit dem Istwert der Zwischenkreisspannung ($U_{DC}$) auf einen Sollwert ($P_{ripple,\ ref}$) für den Leistungsaustausch mit dem Wechselspannungssystem (10) geschlossen wird, und dass die Schaltzeiten ($\tau_a$, $\tau_b$, $\tau_c$) der Mittenabgriffe (50, 51, 52) des Wechselrichters (18) durch eine Leistungsregelung (70) gestellt werden.

6. Verfahren nach Anspruch 5, **dadurch gekennzeichnet, dass** der Sollwert ($P_{ripple,\ ref}$) für den Leistungsaustausch in Sollwerte ($I_{q,ref}$, $I_{d,ref}$) für die Phasenströme ($I_R$, $I_S$, $I_T$) umgesetzt wird, und dass die Schaltzeiten ($\tau_a$, $\tau_b$, $\tau_c$) der Mittenabgriffe (50, 51, 52) des Wechselrichters (18) durch eine Stromregelung des Wechselrichters (18) gestellt werden.

7. Verfahren nach Anspruch 5 oder 6,

**dadurch gekennzeichnet, dass** die Leistungsregelung (70) als eine feldorientierte Regelung (71) des Wechselrichters (18) ausgeführt wird, wobei der Sollwert ($P_{ripple,ref}$) für den Leistungsaustausch unter der Annahme einer konstanten Drehfrequenz (w) des Wechselspannungssystems (10) in einen Sollwert ($I_{q,ref}$) für eine drehmomentbildende Stromkomponente ($I_q$) eines Stromraumzeigers (I) im Wechselspannungssystem (10) umgerechnet wird, wobei für die zur drehmomentbildenden Komponente ($I_q$) senkrechte zweite Komponente ($I_d$) des Stromraumzeigers (I) ein Sollwert ($I_{d,ref}$) vorgegeben wird, und wobei aus einem Vergleich des Sollwerts ($I_{q,ref}$, $I_{d,ref}$) des Stromraumzeigers (I) und des Istwerts ($I_q$, $I_d$) des Stromraumzeigers (I) ein Steilwert ($U_{d,q,ref}$) für einen Spannungsraumzeiger (U) ausgegeben wird, aus dem die Schaltzeiten ($\tau_a$, $\tau_b$, $\tau_c$) der Mittenabgriffe (50, 51, 52) errechnet werden.

8. Verfahren nach einem der Ansprüche 3 bis 7, **dadurch gekennzeichnet, dass** ein durch den elektrischen Teilnehmer (4, 6, 8) geforderter zusätzlicher Leistungsaustausch ($P_{2,ref}$) im Sollwert ($P_{ref}$) für den Leistungsaustausch berücksichtigt wird, insbesondere der für den Leistungsaustausch aus den Istwerten der Phasenspannungen ($U_a$, $U_b$, $U_c$) des Wechselspannungssystems (10) ermittelte Sollwert ($P_{ripple,ref}$) um den zusätzlichen Leistungsaustausch ($P_{2,ref}$) erhöht bzw. verringert wird.

9. Verfahren nach Anspruch 8, **dadurch gekennzeichnet, dass** zur Berechnung des Sollwerts ($U_{DC,ref}$) für die modulierte Zwischenkreisspannung ($U_{DC}$) aus den Istwerten der Phasenspannungen ($U_a$, $U_b$, $U_c$) des Wechselspannungssystems (10) die Übertragungsfunktion (G) eines Netzfilters (60) unter Einbeziehung des zusätzlichen Leistungsaustauschs ($P_{2,ref}$) berücksichtigt wird.

10. Verfahren nach einem der Ansprüche 4 bis 9, **dadurch gekennzeichnet, dass** aus den als Stellgrößen zur Regelung ermittelten theoretischen Schaltzeiten ($\tau_a$, $\tau_b$, $\tau_c$) der Mittenabgriffe (50, 51, 52) des Wechselrichters (18) eine maximale theoretische Schaltzeit ($\tau_{max,theor.}$) bestimmt wird, und dass die maximale theoretische Schaltzeit ($\tau_{max,theor.}$) auf einen vorgegebenen Sollwert geregelt wird, wobei als Stellgröße der Sollwert ($U_{DC,ref}$) für die modulierte Zwischenkreisspannung ($U_{DC}$) angepasst wird.

11. Verfahren nach einem der Ansprüche 4 bis 10, **dadurch gekennzeichnet, dass** die als Stellgrößen zur Regelung ermittelten theoretischen Schaltzeiten ($\tau_a$, $\tau_b$, $\tau_c$) der Mittenabgriffe (50, 51, 52) des Wechselrichters (18) jeweils mit einem Grenzwert verglichen werden, und dass bei Überschreiten des Grenzwerts die jeweilige theoretische Schaltzeit auf einen Endwert gesetzt wird, wobei der Endwert als tatsächliche Schaltzeit verwendet wird.

12. Verfahren nach Anspruch 11, **dadurch gekennzeichnet, dass** der Grenzwert mit einem Wert zwischen 95 % und 98% des Endwerts gewählt wird.

13. Verfahren nach einem der Ansprüche 4 bis 12, **dadurch gekennzeichnet, dass** die Schaltzeiten ($\tau_a$, $\tau_b$, $\tau_c$) auf den Sollwert ($U_{DC,ref}$) für die Zwischenkreisspannung ($U_{DC}$) normiert werden.

14. Verfahren nach einem der vorherigen Ansprüche, **dadurch gekennzeichnet, dass** der elektrische Teilnehmer (4, 6, 8) als ein getakteter Gleichspannungsumrichter (14) oder als ein weiterer Wechselrichter (24) gewählt ist, wobei der Wechselrichter (18) mit dem Gleichspannungsumrichter (14) bzw. mit dem weiteren Wechselrichter (24) synchron getaktet werden, und wobei der Istwert der Zwischenkreisspannung ($U_{DC}$) in gemeinsamen Freilaufphasen des Wechselrichters (18) und des elektrischen Teilnehmers (4, 6, 8) erfasst wird.

15. Verfahren nach Anspruch 14, **dadurch gekennzeichnet, dass** sich die Taktfrequenz des Wechselrichters (18) und des elektrischen Teilnehmers (4, 6, 8) um ein ganzzahliges Vielfaches unterscheidet.

16. Schaltung (30) zur Durchführung des Verfahrens gemäß einem der vorhergehenden Ansprüche, umfassend einen an ein mehrphasiges Wechselspannungssystem (10) über Mittenabgriffe (50, 51, 52) von schaltbaren Halbbrücken (40, 41, 42) anschließbaren mehrphasigen Wechselrichter (18), einen am Wechselrichter (18) angeschlossenen unipolaren Spannungszwischenkreis (16) und einen am Spannungszwischenkreis (16) angeschlossenen elektrischen Teilnehmer (4, 6, 8), **dadurch gekennzeichnet, dass** ein Steuergerät (66) umfasst ist, welches eingerichtet ist, den Wechselrichter (18) überwiegend nach dem Modulationsverfahren einer Ein-Phasen-Taktung zu betreiben, und die Zwischenkreisspannung ($U_{DC}$) mit einem Wechselanteil derart zu modulieren, dass der Leistungsaustausch mit dem Wechselspannungssystem (10) über oberwellenarme Phasenströme ($I_R$, $I_S$, $I_T$) erfolgt.

17. Schaltung (30) nach Anspruch 16, **dadurch gekennzeichnet, dass** eine Regeleinheit (65) für die modulierte Zwischenkreisspannung ($U_{DC}$) umfasst ist.

18. Schaltung (30) nach Anspruch 17, **dadurch gekennzeichnet, dass** die Regeleinheit (65) zur Einstellung der Schaltzeiten ($\tau_a$, $\tau_b$, $\tau_c$) der Mittenabgriffe (50, 51, 52) des Wechselrichters (18) ausgebildet ist.

19. Schaltung (30) nach Anspruch 18,
**dadurch gekennzeichnet, dass** die Regeleinheit (65) einen unterlagerten Leistungsregler (70) des Wechselrichters (18) umfasst.

20. Schaltung (30) nach Anspruch 19,
**dadurch gekennzeichnet, dass** der unterlagerte Leistungsregler (70) als ein Stromregler für eine feldorientierte Regelung (71) des Wechselrichters (18) ausgebildet ist.

21. Schaltung (30) nach Anspruche 19 oder 20,
**dadurch gekennzeichnet, dass** dem Leistungsregler (70) ein Zwischenkreisspannungsregler (74) überlagert ist, der zur Ausgabe einer Zwischenkreisleistung ($P_{ripple,ref}$) eingerichtet ist.

22. Schaltung (30) nach einem der Ansprüche 18 bis 21,
**dadurch gekennzeichnet, dass** ein überlagerter Schaltzeitenregler (73) umfasst ist, der eingerichtet ist, als Stellgröße die Zwischenkreisspannung ($U_{DC}$) zu modifizieren.

23. Schaltung (30) nach Anspruch 22,
**dadurch gekennzeichnet, dass** der unterlagerte Leistungsregler (70) eingerichtet ist, die theoretisch ermittelten Schaltzeiten ($\tau_a$, $\tau_b$, $\tau_c$) bei Überschreiten eines Grenzwertes auf einen Endwert festzusetzen.

24. Schaltung (30) nach einem der Ansprüche 16 bis 23,
**dadurch gekennzeichnet, dass** der elektrische Teilnehmer (4, 6, 8) ein getaktet betreibbarer Gleichspannungsumrichter (14) oder ein weiterer getaktet betreibbarer Wechselrichter (24) ist.

25. Schaltung (30) nach Anspruch 24,
**dadurch gekennzeichnet, dass** an dem getaktet betreibbaren Gleichspannungsumrichter (14) ein Solargenerator (12) oder ein Akkumulator (20) angeschlossen ist, und/oder dass an dem weiteren Wechselrichter (24) ein elektrischer Verbraucher, insbesondere eine Wechselstrommaschine (22), angeschlossen ist.

**Claims**

1. Method for exchanging power between a polyphase AC voltage system (10) and an electrical subscriber (4, 6, 8) via a unipolar voltage intermediate circuit (16), wherein a polyphase inverter (18) connected to the AC voltage system (10) via centre taps (50, 51, 52) of switchable half-bridges (40, 41, 42) shares the voltage intermediate circuit (16) with the electrical subscriber (4, 6, 8), by clocked switching of the centre taps (50, 51, 52) between an upper intermediate circuit rail (36) and a lower intermediate circuit rail (37) of the voltage intermediate circuit (16), **characterized in that** the inverter (18) is predominantly operated according to the modulation method of single-phase clocking, wherein the intermediate circuit voltage ($U_{DC}$) is modulated with an AC component in such a way that the power exchange with the AC voltage system (10) takes place by means of low-harmonic phase currents ($I_R$, $I_S$, $I_T$).

2. Method according to Claim 1,
**characterized in that** for a three-phase voltage system the intermediate circuit voltage ($U_{DC}$) is modulated with an AC component of six times the rotation frequency.

3. Method according to Claim 1 or 2,
**characterized in that** a setpoint value ($U_{DC,ref}$) for the modulated intermediate circuit voltage ($U_{DC}$) is predefined, and **in that** the intermediate circuit voltage ($U_{DC}$) is controlled to the predefined setpoint value ($U_{DC,ref}$).

4. Method according to Claim 3,
**characterized in that** the switching times ($\tau_a$, $\tau_b$, $\tau_c$) of the centre taps (50, 51, 52) of the inverter (18) are used as manipulated variables for the control of the intermediate circuit voltage ($U_{DC}$).

5. Method according to Claim 3 or 4,
**characterized in that** the setpoint value ($U_{DC,ref}$) for the modulated intermediate circuit voltage ($U_{DC}$) is determined from the actual values of the phase voltages ($U_a$, $U_b$, $U_c$) of the AC voltage system (10), **in that** a setpoint value ($P_{ripple,ref}$) for the power exchange with the AC voltage system (10) is deduced by a comparison of the setpoint value of the intermediate circuit voltage ($U_{DC}$) with the actual value of the intermediate circuit voltage ($U_{DC}$), and **in that** the switching times ($\tau_a$, $\tau_b$, $\tau_c$) of the centre taps (50, 51, 52) of the inverter (18) are set by a power control (70).

6. Method according to Claim 5,
**characterized in that** the setpoint value ($P_{ripple,ref}$) for the power exchange is converted into setpoint values ($I_{q,ref}$, $I_{d,ref}$) for the phase currents ($I_R$, $I_S$, $I_T$), and **in that** the switching times ($\tau_a$, $\tau_b$, $\tau_c$) of the centre taps (50, 51, 52) of the inverter (18) are set by a current control of the inverter (18).

7. Method according to Claim 5 or 6,
**characterized in that** the power control (70) is implemented as a field-oriented control (71) of the inverter (18), wherein the setpoint value ($P_{ripple,ref}$) for the power exchange, assuming a constant rotation

frequency ($\omega$) of the AC voltage system (10), is converted into a setpoint value ($I_{q,ref}$) for a torque-forming current component ($I_q$) of a current space vector (I) in the AC voltage system (10), wherein a setpoint value ($I_{d,ref}$) is predefined for the second component ($I_d$) of the current space vector (I), said second component being perpendicular to the torque-forming component ($I_q$), and wherein, from a comparison of the setpoint value ($I_{q,ref}$, $I_{d,ref}$) of the current space vector (I) and the actual value ($I_q$, $I_d$) of the current space vector (I), a manipulated variable ($U_{d,q,ref}$) for a voltage space vector (U) is output, from which the switching times ($\tau_a$, $\tau_b$, $\tau_c$) of the centre taps (50, 51, 52) are calculated.

8. Method according to any of Claims 3 to 7, **characterized in that** an additional power exchange ($P_{2,ref}$) demanded by the electrical subscriber (4, 6, 8) is taken into account in the setpoint value ($P_{ref}$) for the power exchange, in particular the setpoint value ($P_{ripple,ref}$) determined for the power exchange from the actual values of the phase voltages ($U_a$, $U_b$, $U_c$) of the AC voltage system (10) is increased or decreased by the additional power exchange ($P_{2, ref}$).

9. Method according to Claim 8, **characterized in that** the transfer function (G) of a mains system filter (60) with inclusion of the additional power exchange ($P_{2,ref}$) is taken into account for calculating the setpoint value ($U_{DC, ref}$) for the modulated intermediate circuit voltage ($U_{DC}$) from the actual values of the phase voltages ($U_a$, $U_b$, $U_c$) of the AC voltage system (10).

10. Method according to any of Claims 4 to 9, **characterized in that** a maximum theoretical switching time ($\tau_{max,theor.}$) is determined from the theoretical switching times ($\tau_a$, $\tau_b$, $\tau_c$) of the centre taps (50, 51, 52) of the inverter (18), said theoretical switching times being determined as manipulated variables for the control, and **in that** the maximum theoretical time ($\tau_{max,theor.}$) is controlled to a predefined setpoint value, wherein the setpoint value ($U_{DC,ref}$) for the modulated intermediate circuit voltage ($U_{DC}$) is adapted as manipulated variable.

11. Method according to any of Claims 4 to 10, **characterized in that** the theoretical switching times ($\tau_a$, $\tau_b$, $\tau_c$) of the centre taps (50, 51, 52) of the inverter (18), said theoretical switching times being determined as manipulated variables for the control, are compared in each case with a limit value, and **in that**, in the event of the limit value being exceeded, the respective theoretical switching time is set to an end value, wherein the end value is used as actual switching time.

12. Method according to Claim 11, **characterized in that** the limit value is chosen with a value of between 95% and 98% of the end value.

13. Method according to any of Claims 4 to 12, **characterized in that** the switching times ($\tau_a$, $\tau_b$, $\tau_c$) are normalized to the setpoint value ($U_{DC,ref}$) for the intermediate circuit voltage ($U_{DC}$).

14. Method according to any of the preceding claims, **characterized in that** the electrical subscriber (4, 6, 8) is chosen as a clocked DC voltage converter (14) or as a further inverter (24), wherein the inverter (18) together with the DC voltage converter (14) or with the further inverter (24) are clocked synchronously, and wherein the actual value of the intermediate circuit voltage ($U_{DC}$) is detected in common freewheeling phases of the inverter (18) and of the electrical subscriber (4, 6, 8).

15. Method according to Claim 14, **characterized in that** the clock frequency of the inverter (18) and that of the electrical subscriber (4, 6, 8) differ by an integral multiple.

16. Circuit (30) for carrying out the method according to any of the preceding claims, comprising a polyphase inverter (18), which is connectable to a polyphase AC voltage system (10) via centre taps (50, 51, 52) of switchable half-bridges (40, 41, 42), a unipolar voltage intermediate circuit (16) connected to the inverter (18), and an electrical subscriber (4, 6, 8) connected to the voltage intermediate circuit (16), **characterized in that** a control device (66) is comprised, which is designed to operate the inverter (18) predominantly according to the modulation method of single-phase clocking and to modulate the intermediate circuit voltage ($U_{DC}$) with an AC component in such a way that the power exchange with the AC voltage system (10) takes place via low-harmonic phase currents ($I_R$, $I_S$, $I_T$).

17. Circuit (30) according to Claim 16, **characterized in that** a control unit (65) for the modulated intermediate circuit voltage ($U_{DC}$) is comprised.

18. Circuit (30) according to Claim 17, **characterized in that** the control unit (65) is designed for setting the switching times ($\tau_a$, $\tau_b$, $\tau_c$) of the centre taps (50, 51, 52) of the inverter (18).

19. Circuit (30) according to Claim 18, **characterized in that** the control unit (65) comprises a subordinate power controller (70) of the inverter (18).

20. Circuit (30) according to Claim 19,

**characterized in that** the subordinate power controller (70) is embodied as a current controller for a field-oriented control centre (71) of the inverter (18).

21. Circuit (30) according to Claim 19 or 20, **characterized in that** an intermediate circuit voltage controller (74) designed for outputting an intermediate circuit power ($P_{ripple,ref}$) is superposed on the power controller (70).

22. Circuit (30) according to any of Claims 18 to 21, **characterized in that** a superposed switching time controller (73) is comprised, which is designed to modify the intermediate circuit voltage ($U_{DC}$) as manipulated variable.

23. Circuit (30) according to Claim 22, **characterized in that** the subordinate power controller (70) is designed to fix the theoretically determined switching times ($\tau_a$, $\tau_b$, $\tau_c$) to an end value in the event of a limit value being exceeded.

24. Circuit (30) according to any of Claims 16 to 23, **characterized in that** the electrical subscriber (4, 6, 8) is a DC voltage converter (14) operable in a clocked manner or a further inverter (24) operable in a clocked manner.

25. Circuit (30) according to Claim 24, **characterized in that** a solar generator (12) or an accumulator (20) is connected to the DC voltage converter (14) operable in a clocked manner, and/or **in that** an electrical load, in particular an AC machine (22), is connected to the further inverter (24).

**Revendications**

1. Procédé pour l'échange de puissance entre un système de tension alternative polyphasée (10) et un participant électrique (4, 6, 8) via un circuit intermédiaire de tension unipolaire (16), dans lequel un onduleur polyphasé (18) raccordé au système de tension alternative (10) via des prises centrales (50, 51, 52) de demi-ponts (40, 41, 42) commutables partage le circuit intermédiaire de tension (16) avec le participant électrique (4, 6, 8) grâce à une commutation cadencée des prises centrales (50, 51, 52) entre une barre bus de circuit intermédiaire supérieure (36) et une barre bus de circuit intermédiaire inférieure (37) du circuit intermédiaire de tension (16), **caractérisé en ce que** l'onduleur (18) est exploité essentiellement selon le procédé de modulation d'un cadencement monophasé, dans lequel la tension de circuit intermédiaire ($U_{DC}$) est modulée avec une fraction d'alternance de courant de telle sorte que l'échange de puissance avec le système de tension alternative (10) s'effectue via des courants de phase

($I_R$, $I_S$, $I_T$) pauvres en ondes harmoniques.

2. Procédé selon la revendication 1, **caractérisé en ce que**, pour un système de tension rotative, la tension de circuit intermédiaire ($U_{DC}$) est modulée avec une fraction d'alternance de courant de six fois la fréquence de rotation.

3. Procédé selon la revendication 1 ou 2, **caractérisé en ce qu'**une valeur de consigne ($U_{DC,ref}$) est prescrite pour la tension de circuit intermédiaire modulée ($U_{DC}$), et **en ce que** la tension de circuit intermédiaire ($U_{DC}$) est réglée à la valeur de consigne ($U_{DC,ref}$) prescrite.

4. Procédé selon la revendication 3, **caractérisé en ce que**, en guise de grandeurs de commande pour le réglage de la tension de circuit intermédiaire ($U_{DC}$), on tient compte des temps de commutation ($\tau_a, \tau_b, \tau_c$) des prises centrales (50, 51, 52) de l'onduleur (18).

5. Procédé selon la revendication 3 ou 4, **caractérisé en ce que** la valeur de consigne ($U_{DC,ref}$) pour la tension de circuit intermédiaire modulée ($U_{DC}$) est déterminée à partir des valeurs réelles des tensions de phase ($U_a$, $U_b$, $U_c$) du système de tension alternative (10), **en ce que**, grâce à une comparaison entre la valeur de consigne de la tension de circuit intermédiaire ($U_{DC}$) et la valeur réelle de la tension de circuit intermédiaire ($U_{DC}$), on en déduit une valeur de consigne ($P_{ripple,ref}$) pour l'échange de puissance avec le système de tension alternative (10), et **en ce que** les temps de commutation ($\tau_a, \tau_b, \tau_c$) des prises centrales (50, 51, 52) de l'onduleur (18) sont fixés grâce à un dispositif de régulation de puissance (70).

6. Procédé selon la revendication 5, **caractérisé en ce que** la valeur de consigne ($P_{ripple, ref}$) pour l'échange de puissance est convertie en valeurs de consignes ($I_{q, ref}$, $I_{d,ref}$) pour les courants de phase ($I_R$, $I_S$, $I_T$), et **en ce que** les temps de commutation ($\tau_a, \tau_b, \tau_c$) des prises centrales (50, 51, 52) de l'onduleur (18) sont fixés grâce à une régulation de courant de l'onduleur (18).

7. Procédé selon la revendication 5 ou 6, **caractérisé en ce que** le dispositif de régulation de puissance (70) est réalisé en tant que dispositif de régulation à champ orienté (71) de l'onduleur (18), dans lequel la valeur de consigne ($P_{ripple,ref}$) pour l'échange de puissance, en supposant une fréquence de rotation constante ($\overline{\omega}$) du système de tension alternative (10), est convertie en une valeur de consigne ($I_{q,ref}$) pour une composante de courant ($I_q$) formant un couple de rotation d'un vecteur spatial de courant (I) dans le système de tension alternative (10), dans lequel une valeur de consigne ($I_{d,ref}$) est prescrite pour une deuxième composante ($I_d$) du vecteur spatial de courant (I) qui est perpendiculaire à la composante formant un couple de rotation (Iq), et dans lequel on fait sortir, à partir d'une comparaison entre la valeur de consigne ($I_{q,ref}$, $I_{d,ref}$) du vecteur spatial de courant (I) et la valeur réelle ($I_q$, $I_d$) du vecteur spatial de courant (I), une valeur de réglage ($U_{d,q,ref}$) pour un vecteur spatial de tension (U) à partir de laquelle valeur on calcule les temps de commutation ($\tau_a$, $\tau_b$, $\tau_c$) des prises centrales (50, 51, 52).

8. Procédé selon l'une des revendications 3 à 7, **caractérisé en ce que** l'on tient compte d'un échange de puissance ($P_{2,ref}$) supplémentaire exigé par le participant électrique (4, 6, 8) dans la valeur de consigne ($P_{ref}$) pour l'échange de données, en particulier la valeur de consigne ($P_{ripple,ref}$) déterminée pour l'échange de puissance à partir des valeurs réelles des tensions de phase ($U_a$, $U_b$, $U_c$) du système de tension alternative (10) étant augmentée ou diminuée de l'ordre de l'échange de puissance ($P_{2,ref}$) supplémentaire.

9. Procédé selon la revendication 8, **caractérisé en ce que**, pour le calcul de la valeur de consigne ($U_{DC,ref}$) pour la tension de circuit intermédiaire ($U_{DC}$) modulée à partir des valeurs réelles des tensions de phase ($U_a$, $U_b$, $U_c$) du système de tension alternative (10), on tient compte de la fonction de transfert (G) d'un filtre de réseau (60) en tenant compte de l'échange de puissance ($P_{2,ref}$) supplémentaire.

10. Procédé selon l'une des revendications 4 à 9, **caractérisé en ce que** l'on détermine, à partir des temps de commutation théoriques ($\tau_a$, $\tau_b$, $\tau_c$) des prises centrales (50, 51, 52) de l'onduleur (18) déterminés en tant que grandeurs de commande pour la régulation, un temps de commutation théorique maximal ($\tau_{max,theor.}$), et **en ce que** le temps de commutation théorique maximal ($\tau_{max,theor.}$) est réglé à une valeur de consigne prescrite, la valeur de consigne ($U_{DC,ref}$) en tant que de grandeur de commande étant adaptée pour la tension de circuit intermédiaire modulée ($U_{DC}$).

11. Procédé selon l'une des revendications 4 à 10, **caractérisé en ce que** les temps de commutation théoriques ($\tau_a$, $\tau_b$, $\tau_c$) des prises centrales (50, 51, 52) de l'onduleur (18) déterminés en tant que grandeurs de commande pour la régulation sont respectivement comparés avec une valeur limite, et **en ce qu'**en cas de dépassement par le haut de la valeur limite, le temps de commutation théorique respectif est fixé à une valeur finale, la valeur finale étant utilisée en tant que temps de commutation réel.

12. Procédé selon la revendication 11, **caractérisé en ce que** la valeur limite est sélectionnée avec une valeur comprise entre 95% et 98% de la valeur finale.

13. Procédé selon l'une des revendications 4 à 12, **caractérisé en ce que** les temps de commutation ($\tau_a$, $\tau_b$, $\tau_c$) sont normalisés à la valeur de consigne ($U_{DC,ref}$) pour la tension de circuit intermédiaire ($U_{DC}$).

14. Procédé selon l'une des revendications précédentes, **caractérisé en ce que** le participant électrique (4, 6, 8) est sélectionné en tant qu'un convertisseur de tension continue cadencé (14) ou en tant qu'un autre onduleur (24), dans lequel l'onduleur (18) est cadencé de manière synchrone avec le convertisseur de tension continue (14) ou avec l'autre onduleur (24), et dans lequel la valeur réelle de la tension de circuit intermédiaire ($U_{DC}$) est détectée dans des phases de marche à vide communes de l'onduleur (18) et du participant électrique (4, 6, 8).

15. Procédé selon la revendication 14, **caractérisé en ce que** la fréquence de cadence de l'onduleur (18) et du participant électrique (4, 6, 8) diffèrent de l'ordre d'un multiple entier.

16. Circuit (30) pour la mise en oeuvre du procédé selon l'une des revendications précédentes, comprenant un onduleur polyphasé (18) pouvant être raccordé via des prises centrales (50, 51, 52) de demi-ponts commutables (40, 41, 42) à un système de tension alternative polyphasé (10), un circuit intermédiaire de tension unipolaire (16) raccordé à l'onduleur (18) et un participant électrique (4, 6, 8) raccordé au circuit intermédiaire de tension (16), **caractérisé en ce qu'**un appareil de commande (66) est compris, lequel est étudié pour exploiter l'onduleur (18) essentiellement selon le procédé de modulation d'un cadencement monophasé et pour moduler la tension de circuit intermédiaire ($U_{DC}$) avec une fraction d'alternance de courant de telle sorte que l'échange de puissance avec le système de tension alternative (10) s'effectue via des courants de phase ($I_R$, $I_S$, $I_T$) pauvres en ondes harmoniques.

17. Circuit (30) selon la revendication 16, **caractérisé en ce qu'**une unité de régulation (65) est comprise pour la tension de circuit intermédiaire modulée ($U_{DC}$).

18. Circuit (30) selon la revendication 17, **caractérisé en ce que** l'unité de régulation (65) est réalisée pour le réglage des temps de commutation ($\tau_a$, $\tau_b$, $\tau_c$) des prises centrales (50, 51, 52) de l'onduleur (18).

19. Circuit (30) selon la revendication 18, **caractérisé en ce que** l'unité de régulation (65) comprend un dispositif de régulation de puissance (70) subordonné de l'onduleur (18).

20. Circuit (30) selon la revendication 19, **caractérisé en ce que** le dispositif de régulation de puissance (70) subordonné est réalisé en tant qu'un régulateur de courant pour un dispositif de régulation à champ orienté (71) de l'onduleur (18).

21. Circuit (30) selon la revendication 19 ou 20, **caractérisé en ce qu'**un régulateur de tension de circuit intermédiaire (74) est prioritaire sur le dispositif de régulation de puissance (70), lequel est étudié pour la sortie d'une puissance de circuit intermédiaire ($P_{ripple,ref}$).

22. Circuit (30) selon l'une des revendications 18 à 21, **caractérisé en ce qu'**un régulateur de temps de commutation prioritaire (73) est compris, lequel est étudié pour modifier la tension de circuit intermédiaire ($U_{DC}$) en tant que grandeur de commande.

23. Circuit (30) selon la revendication 22, **caractérisé en ce que** le dispositif de régulation de puissance subordonné (70) est étudié pour fixer à une valeur finale les temps de commutation ($\tau_a$, $\tau_b$, $\tau_c$) déterminés théoriquement en cas de dépassement par le haut d'une valeur limite.

24. Circuit (30) selon l'une des revendications 16 à 23, **caractérisé en ce que** le participant électrique (4, 6, 8) est un convertisseur de tension continue (14) exploitable de manière cadencée ou un autre onduleur (24) exploitable de manière cadencée.

25. Circuit (30) selon la revendication 24, **caractérisé en ce qu'**un générateur solaire (12) ou un accumulateur (20) est raccordé au convertisseur de tension continue (14) exploitable de manière cadencée et/ou **en ce qu'**un consommateur électrique, en particulier une machine à courant alternatif (22), est raccordé(e) à l'autre onduleur (24).

Fig. 1

Fig. 2

Fig. 3

Fig. 4

Fig. 5

Fig. 6

Fig. 7

Fig. 8

Fig. 9

Fig. 10

Fig. 11

Fig. 12

EP 2 786 473 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0363514 A1
- US 6819078 B2
- EP 0840441 B1
- EP 2192682 A1

**In der Beschreibung aufgeführte Nicht-Patentliteratur**

- **HANDLEY, P.G. ; BOYS, J.T.** Practical real-time PWM modulators: an assess-ment. *IEE Proceedings B, Electric Power Applications,* Marz 1992, vol. 139, 96